(19)

**Europäisches Patentamt**
**European Patent Office**
**Office européen des brevets**

(11) **EP 4 446 820 A1**

(12) **EUROPEAN PATENT APPLICATION**

(43) Date of publication:
**16.10.2024 Bulletin 2024/42**

(21) Application number: **23383284.9**

(22) Date of filing: **13.12.2023**

(51) International Patent Classification (IPC):
**G03H 1/00** *(2006.01)*        **G03H 1/02** *(2006.01)*
**G02B 5/20** *(2006.01)*        **G02B 5/32** *(2006.01)*
**F41H 3/02** *(2006.01)*        G03H 1/22 *(2006.01)*
G03H 1/26 *(2006.01)*        G03H 1/28 *(2006.01)*
G03H 1/30 *(2006.01)*

(52) Cooperative Patent Classification (CPC):
**G03H 1/0005; F41H 3/02; G02B 5/203; G02B 5/32;**
**G03H 1/0256;** G03H 1/28; G03H 2001/2263;
G03H 2001/2284; G03H 2001/2615;
G03H 2001/303

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.04.2023 EP 23382343**

(71) Applicant: **Singular Control Energy, SL**
**03400 Villena (Alicante) (ES)**

(72) Inventor: **MÁS ABELLÁN, Pedro**
**03400 Villena (Alicante) (ES)**

(74) Representative: **Sahuquillo Huerta, Jesús**
**Jesana Patentes, SL**
**Jesana iP**
**C/ Huesca 5 ,Oficina 2**
**46001 Valencia (ES)**

(54) **HOLOGRAPHIC SYSTEM AND METHOD FOR THE OPTIMISATION OF INCIDENT SOLAR RADIATION**

(57)     A holographic system and method for the optimisation of incident solar radiation on a physical system comprising a meshed structure formed by one or more holographic optical elements configurable according to at least one of the following parameters: (a) the wavelength ($\lambda$) or colour to be diffracted; (b) the bandwidth ($\Delta\lambda$) or amount of that colour to be diffracted; (c) the diffraction efficiency ($\eta$) or percentage to be diffracted with respect to the incident light; (d) the direction of diffraction ($\alpha$); and (e) the presence or absence of optical magnification (M); where the lattice structure is a simple structure consisting of groupable holographic optical elements in a regular or semi-regular tessellation, forming fractal structures; or the lattice structure is a fractal structure composed by superposition of two or more tessellations; the multilayer tessellation structure being configured for superposition of optical effects according to the optical properties of each layer of holographic optical elements; so that the optical properties of such holographic optical elements are selected according to the solar radiation required for the optimisation of radiation in the visible and/or near infrared and/or ultraviolet spectrum on a solar radiation harvesting system.

FIG.2(A)

FIG.2(B)

FIG. 2(C)

FIG.2(D)

FIG.2(E)

FIG.2(F)

FIG.2

EP 4 446 820 A1

**Description**

The present invention relates to a holographic system and method for optimising the use of solar radiation in accordance with the particular needs of each specific use. The present invention aims to provide tools for the efficient use of solar energy, through the development of holographic systems that optimise the use of solar radiation for each particular or concrete application, improving the efficiency in the use of solar energy.

Energy is behind all the great economic changes that have occurred throughout history, especially those of the last two centuries. The three great industrial revolutions that have transformed the world have been based on the appearance of new energy sources, which have been the hallmark of each of them.

The First Industrial Revolution (late 18th and 19th century) was based on coal, allowing the steam engine to appear. The Second (first half of the 20th century) was based on oil to drive internal combustion engines. The Third Industrial Revolution (late 20th century), marked by the rise of electronics and Information and Communication Technologies, seemed destined to be driven by nuclear energy. However, due to the high installation and maintenance costs of plants using uranium as fuel and the serious accidents at *Three Mile Island* in 1979, Chernobyl in 1986 and Fukushima in 2011, this energy has been relegated to a secondary role in a large number of countries that were once committed to it. This is why the energy mix in the latter has not changed substantially, being based mainly on oil and gas and, to a still incipient extent, on renewable energies.

Due to human action, the concentration of greenhouse gases in the atmosphere is steadily increasing, progressively increasing the effects of climate change. At present, the combination of factors such as a progressive increase in population and modern lifestyle, based on the digital revolution with an increasingly electrified society, means that the world requires increasing amounts of energy to cover demand and, due to the current heavy dependence on fossil fuels in energy generation and transport systems, the highest levels of $CO_2$ emissions in history have been reached. This fact has not gone unnoticed by the different governments of the international community, generating a process of global awareness to reduce greenhouse gas emissions, mainly $CO_2$.

There is currently a high energy dependence on fossil fuel-based energy sources (oil, coal, and gas). This is due to the fact that these energy systems have been implemented and developed for many years and the energy technology is already mature. In order to minimise the levels of $CO_2$ emissions into the atmosphere, there must be a transition from the more polluting energies of the last century, oil, gas and coal to the cleaner and more sustainable energy sources of the 21st century, renewable energies.

Such a migration to clean energy presents a problem to be solved. Because renewable energies are still in their infancy, their technology is still in the process of being developed to maximise their productivity. This is why, in order to cover current energy needs, it is necessary to resort to fossil fuels. Therefore, in order to achieve a more rapid reduction in $CO_2$ emissions, as well as progress in the development of renewable energies, it is necessary to reduce current energy demands by promoting the efficient use of energy as a means to mitigate or minimise the impact of such energy demand and thus be able to match clean energy production with the required energy demand. Consequently, huge advances are being made in more efficient lighting systems, based on LED lighting rather than incandescent lighting that requires more energy, development of electric means of transport or better insulation systems for homes, among others. It is obvious how the concepts of energy efficiency, renewable energies and reduction of greenhouse gas emissions are so intrinsically linked, being the different sides of a far-reaching sustainability triangle.

The European Union, due on the one hand to its energy dependence on Russia and Algeria and, at the same time, aware of the problems of pollution and the climate crisis, has positioned itself at the forefront of the world to carry out the third energy transition based on renewable energy and not to depend on fossil fuels. As is logical, an energy transition is not an immediate process, which is why it has established objectives and broad timeframes to be able to suitably prepare and develop its energy system in the form of a Strategic *Integrated* Energy Technology Plan (*INTEGRATED STRATEGIC ENERGY TECHNOLOGY (SET) PLAN*) or roadmap setting out the objectives to be met in order to position itself as a leader in new energy generation, energy storage and energy efficiency technologies in the coming years.

In the European Strategic Integrated Energy Technology Plan developed, key actions 1 and 2 specify the five renewable energies on which the energy future will be based: photovoltaic solar energy, solar thermal energy, wind energy, geothermal energy and tidal energy. Through this key action, the European Union aims to narrow down and define the classification of energies it considers renewable and on which it will base its long-term energy future. In turn, Key Actions 5 and 6 of the Integrated Energy Technology Strategic Plan introduce the concept of *NEARLY ZERO-ENERGY BUILDINGS* (NZEB), which aims to establish the guidelines for buildings in the European Union to have a positive energy balance, i.e. to generate the energy necessary to cover their own energy demand and, if possible, to integrate the excess energy produced into the energy grid in order to distribute it to other facilities. Through these key actions, the European Union aims to reduce the current energy demand and thus be able to cover energy needs with renewable energies, without having to use fossil fuel-based energies. This measure is framed in the context of energy efficiency. Likewise, in key actions 7 and 8 of the Strategic Plan for Integrated Energy Technology, the European Union intends to establish the actions to be conducted to develop sustainable transport systems, mitigating carbon emissions from current means of transport by electric systems. Thus, the key actions 1 to 8 of the European Strategic Integrated Energy Technology Plan are basically aimed at minimising CO2 emissions in the European Union, both in industry, housing and transport, by jointly attacking the three sides of the sustainability triangle mentioned above.

In a simple analysis of the five renewable energies proposed by the European Union for the energy revolution, photovoltaic solar energy appears to be the energy source with the most attractive potential to exploit, not only because of its many advantages, such as: it is inexhaustible, it does not pollute, it is suitable for isolated and/or rural areas (energy islands), its useful life is more than 30 years, and once installed, its fuel is free and for life, it is suitable for isolated and/or rural areas (energy islands), its useful life is more than 30 years or that once installed, its fuel is free and for life, but mainly because it is scalable, i.e., it can be implemented from private homes to large areas of deployment, a fact that solar thermal, tidal, geothermal and wind energy do not allow. Due to the fact that in the European SET Plan, in key actions 5 and 6, distributed energy production is marked as a roadmap, being produced in buildings, homes or industries, the only viable energy source for its installation is photovoltaic solar energy. Situations such as these point to photovoltaic development as the energy technology with the best future prospects.

The Sun is the largest and most constant source of energy in our solar system, and its energy reaches the Earth in the form of light and heat. This energy is crucial for the existence of life, directly affecting natural and human systems, from photosynthesis in plants to global climate and food production. The amount of energy we receive from the Sun on Earth is impressive. According to NASA, the amount of solar energy reaching the Earth's surface is approximately 1,366 W/m$^2$ in outer space. Due to absorption and scattering in the atmosphere, the amount of energy that actually reaches the Earth's surface is approximately 1,000 W/m$^2$ on a bright day at noon at the equator. To put this amount of energy into perspective, according to the US Department of Energy, the solar energy that the earth receives continuously is approximately 173,000 TW, which is more than 10,000 times the world's total energy requirement. According to the same source (the US Department of Energy), the amount of energy the Earth receives from the Sun in one hour can be considered sufficient to cover the entire world's energy demand for an entire year. To compare this with current energy sources, to generate the same amount of energy that reaches the earth from the sun in one year would require around 13,000 nuclear power plants operating at full capacity for the whole year, or, on the other hand, the energy received would be equivalent to around 170 billion barrels of oil.

This data postulates solar energy as the most abundant energy resource on the planet. However, there is no efficient use of this amount of energy.

Solar energy is essential for cultivating the land, producing crops and raising livestock. Developed some 10,000 years ago, agriculture played a key role in the rise of civilisation. In agriculture, careful use of the sun, such as crop rotation, made it possible to increase yields. In turn, the use of solar energy for drying food prevented crops from spoiling, and this surplus food allowed for greater population density and structured societies. A further advance in the use of solar energy in agriculture came with the development of greenhouses, which allowed sunlight to be converted into heat. Greenhouses allow plants to be grown out of season and in climates that may not be suitable for them. One of the earliest greenhouses dates back to 30 BC even before glass was invented. Constructed from translucent sheets of mica, a thin mineral, it was built for the Roman Emperor Tiberius, who wanted to be able to eat cucumbers all year round. The general technique is the same today, although there have been many improvements to increase the variety and quantity of crops grown.

Once the food has been collected, solar energy can also be used to cook it. The first solar cooker was built in 1767 by Horace de Saussure, a Swiss physicist. It was used to cook fruit and reached temperatures of 87.8°C (190°F). Today, many diverse types of solar cookers are used for cooking, drying and pasteurising, which slows the growth of microbes in food. Solar cookers are increasingly used in many parts of the world. An estimated half a million are installed in India alone. In Nicaragua, a modified solar cooker is being used to sterilise medical equipment in clinics.

In construction, the use of solar energy dates back to the earliest civilisations around the world, in which buildings were placed facing south to gather heat and light, through the use of openings that allowed light and ventilation to enter. Nowadays, the use of solar energy in building is of vital importance, seeking a correct air conditioning, through the use of various insulating materials in the facades, and lighting, through the use of glass windows that allow the passage of light, seeking as an objective in architecture, the construction of homes, offices or workplaces with an adequate level of comfort that allows a correct habitability.

Solar energy is also used to heat water. First introduced in the late 1800s, the solar water heater was a significant improvement over wood- or coal-burning cookers because it was cleaner and less expensive to operate. They were extremely popular for American homes in sunny locations, including the states of Arizona, Florida and California. Today, solar water heaters (solar water heaters) are increasingly being installed in construction as a measure to improve energy efficiency.

In addition to heating water, solar energy can be used to make water safe to drink. Developed in the 1980s, solar disinfection (SODIS) is a water treatment method that uses solar energy to improve the microbiological quality of water by filling transparent plastic bottles with water and then exposing them to sunlight for several hours. This process reduces viruses, bacteria and protozoa in the water. SODIS is an inexpensive and effective method for decentralised water treatment, usually applied in domestic use and is recommended by the World Health Organisation as a viable method for household water treatment and safe storage. SODIS is already applied in many developing countries as a method for producing drinking water.

At present, the best-known method of using solar energy is for the production of electricity. This can be done in several ways, the two most common being solar photovoltaics and solar thermal energy. In solar photovoltaics, photocells convert sunlight directly into electricity through the photoelectric effect. The first solar cell was built in the 1880s. The first major application was on the US satellite *VANGUARD I,* launched in 1958. Since then, solar cells have become the established power source for satellites, including those used in the telecommunications industry. On Earth, solar cells are now used for virtually everything from calculators and clocks to powering homes, commercial buildings and even stadiums. Solar thermal, unlike photovoltaics, uses concentrating technologies to utilise the sun's energy through its thermal properties. Here, by using lenses or mirrors to focus sunlight on a single point, a high concentration of radiation is generated, causing elevated temperatures that can be used to evaporate certain substances (commonly water or oil) and run turbines to generate electricity.

As can be seen in the different applications, practically the use of solar energy is based on capturing direct sunlight for use, using the sun/shade combination as the basic unit, with solar concentrating systems being the most advanced technology used in solar energy management. Because the use of solar energy as an energy source has developed mainly in the last half century, with a big boost in the last five years, it is actually a rather nascent energy source compared to other current energy sources. So far, all applications that require energy from the sun are based on placing the required device in the sun, using the whole spectrum of solar radiation, using the sun "*as a whole"* together and without any kind of process or transformation to maximise its performance, making them relatively inefficient systems with a high degree of improvement.

In the opposite situation to solar energy, oil is not used directly after extraction. Once oil has been extracted, it is subjected to different treatment and transformation processes in order to obtain as many products of high commercial value as possible. All these treatments together constitute the oil refining process. This refining process makes it possible to achieve highly efficient energy systems based on the optimum use of oil as an energy source, making the last great industrial and energy revolution possible, as we have already mentioned. In order to carry out the energy transition from fossil fuel-based energy sources to renewable energies and enable a new industrial revolution towards total electrification, we must make efforts and advances focused on optimising the production and use of renewable energies, mainly solar energy.

The subject matter of the present invention is a system and method for the optimal use of solar energy. This object is achieved by the claims accompanying this specification. Other systems and/or methods describing the features described below are not known.

As is well known to those who experts in the field are, the electromagnetic spectrum is composed of different electromagnetic bands, which classify the type of wave according to the range of wavelengths they have. Broadly speaking, electromagnetic waves could be classified into eight groups: cosmic rays; gamma rays, X-rays, ultraviolet, visible spectrum (light), infrared, microwaves and radio waves.

Solar radiation is composed of various electromagnetic waves of different wavelengths. When solar radiation passes through the atmosphere, the presence of the various particles that make it up (ozone, water, carbon dioxide and other molecules) causes the absorption of certain radiation and the blocking of others. This fact has allowed life to appear on our planet because it prevents harmful radiation (incompatible with life) from reaching the Earth's crust. As a result, the spectral irradiance reaching the Earth's crust from the Sun comprises the ultraviolet, visible and infrared spectral bands. One of the important characteristics of electromagnetic waves is that they carry energy. The energy of an electromagnetic wave is related to its frequency (or wavelength), so:

$$E = h \cdot f = h \frac{v}{\lambda}$$

Where h is Planck's constant, *f* is the frequency, v is the speed of propagation and λ is the wavelength, so the shorter the wavelength, the more energy a wave carries.

Until now, all these spectral bands of radiation have been used together (utilisation of the sun as a "whole") whenever solar energy is to be used in any of the various applications. However, not all waves of the solar spectrum are needed for all applications. This means that radiation of a wavelength that cannot be used in each case could be at best harmless, and at other times directly harmful. The present invention aims to solve this technical problem through the efficient use of solar energy, by developing holographic devices that optimise the use of solar radiation for a particular or specific application, optimising the efficiency in the use of solar energy.

The idea behind the system and method of the invention is to treat solar radiation, not as a "whole" (as until now), but to treat each part of solar radiation ad-hoc in each application (according to its needs), thus avoiding unnecessary waves that may produce negative or counterproductive effects, and consequently increasing energy efficiency in its use. This implies a new approach in the perspective with which the use of the sun was approached, going from considering its use as a "whole" (traditional use of the sun) to its use as a "set of parts" (new approach to the use of solar energy) that can be processed independently.

The devices for optimising the use of solar radiation in accordance with the present invention will generally consist of hybrid holographic optical *elements* (HOE) that allow the management of the part of the sun's spectrum required for each application. Depending on the application, the part of the solar spectrum required may differ. For example, horticultural techniques, solar water disinfection, solar hydrogen (H2) generation, daylight lighting systems, photovoltaic power generation, solar chemistry processes or air conditioning in construction do not use the same part of the solar spectrum, which is why, in order to maximise the yield of the solar processes, the solar energy is needed in different ways, to maximise process performance, it should be possible to use the part of the solar spectrum that is specific to that process and not the rest of the spectrum, which may cause unwanted side effects such as temperature increase, generation of by-products, proliferation of pathogens, or any other.

In this invention we are going to deal with holographic solar optimisation devices to be able to manage the various parts of the solar energy independently and optimised according to the different applications in which it is going to be used.

*Use of the invention in horticulture and agriculture*

Light plays a fundamental role in several physiological and developmental processes, such as photosynthesis, a chemical process driven by light energy by which plants make their own food, or photomorphogenesis, by which plants regulate growth and development processes in response to light. Both processes are fundamental to plant life and development, but have different objectives and mechanisms, because photomorphogenesis and photosynthesis use different wavelength ranges of light and different photoreceptors to carry out their specific functions. Photosynthesis is the process by which plants and other photosynthetic organisms convert light energy into chemical energy, using light energy to convert carbon dioxide and water into carbohydrates (sugars) and oxygen, which is essential for life on Earth. Photosynthesis occurs in chloroplasts, which contain photosynthetic pigments such as chlorophyll that absorb light, and involves numerous steps, but can be broadly divided into two stages: the light-dependent reactions, and the Calvin cycle.

In general, in light-dependent reactions, chlorophyll absorbs light energy and converts it into chemical energy by forming two chemical compounds, adenosine triphosphate ATP (an energy storage molecule) and reducing power NADPH (a reduced electron-carrying molecule), which are used to make the carbon-to-carbon bonds in the dark stage. In the dark stage, Calvin cycle reactions occur, ATP is broken down to release energy, and NADPH donates its electrons to convert carbon dioxide molecules into sugars. Consequently, the energy that started out as light ends up trapped in the bonds of the sugars, transforming light energy (usually solar energy) into chemical energy in the form of sugars. In the absence of the light stage, the process could not take place, which is why light is of vital importance for plant growth.

Light-dependent reactions require a continuous supply of light energy. We commonly refer to electromagnetic waves within the wavelength range of 400-700 nanometres (nm) as light. This ranges from ultraviolet light (with shorter wavelengths) to infrared light (with longer wavelengths) corresponding to the visible spectrum of the electromagnetic spectrum and as mentioned above, is provided by the sun. However, plants do not use the entire solar spectrum for photosynthesis; they use a specific range of wavelengths called photosynthetically active radiation, which is between 400 and 700 nanometres, belonging to the visible range of the electromagnetic spectrum. This wavelength range contains the energy that plants need for photosynthesis. At the same time, not all wavelengths within this range are equally useful for photosynthesis. Only certain wavelengths of light are absorbed by photosynthetic pigments in plants to drive the process of photosynthesis. Wavelengths of light that are not absorbed are not used for photosynthesis and can normally generate counterproductive effects that saturate the plant, such as heat build-up in plant tissues that can contribute to plant damage and even interfere with photosynthesis by decreasing the photosynthetic rate, therefore these wavelengths are normally reflected.

Generally speaking, the wavelengths of light that are most effective for photosynthesis are in the blue (around 430-450 nm) and red (around 640-680 nm) regions of the spectrum, which is where chlorophyll absorption is most effective. These wavelengths are particularly important for the light absorption stage of photosynthesis and are crucial for photosynthetic efficiency. Meanwhile, the green and yellow spectral region (around 500-600 nm) is not used efficiently and is therefore not as effective for photosynthesis, which has led to plants even evolving to reflect green light in order to absorb more red and blue light. Wavelengths of light outside the visible range that are also provided by the sun, such as ultraviolet and infrared light, are not very efficient photosynthetically. Ultraviolet light can even damage plant cells while infrared light does not have enough energy to be absorbed by chlorophyll molecules, therefore, both areas of the visible spectrum are not so important for most plants and are only relevant under special conditions, and are therefore, as a rule, not useful for photosynthesis. Therefore, the blue and red bands of light are the bands generally considered to be the only part of light that really matters for photosynthetic production in plants. In fact, plant chlorophyll absorbs more energy from red light than from blue light, and plants tend to grow more when additional red light is provided.

In plants, many other light-induced effects occur that are independent of photosynthesis. Most of these effects control the appearance of the plant, its structural development or morphogenesis. The control of morphogenesis by light is known as photomorphogenesis. Photomorphogenesis refers to the regulation of plant growth and development in response to light. Here, by means of different photoreceptors, plants detect the quality (wavelength), intensity and duration of light to regulate various physiological and morphological processes, including seed germination, stem growth, leaf formation, flowering or chloroplast formation.

Light therefore plays a key role in modulating these processes and allows plants to adapt and respond appropriately to their light environment. However, plants do not use the entire solar spectrum equally, as they are spectrally selective and use each wavelength of light for different purposes.

Different photoreceptors, such as phytochromes, cryptochromes and phototropins, play a crucial role in light perception and signal transmission to regulate these developmental processes and are designed to operate in a range of specific wavelengths which are associated with promoting the growth of different plant parts. For example, phytochromes are sensitive to red light (approximately 660-700 nm) and far-red light (approximately 710-750 nm). Red light promotes seed germination, stem elongation and leaf formation, while far-red light inhibits these processes and promotes the formation of lateral shoots. Cryptochromes are sensitive to blue light (approximately 350-450 nm) and play a role in inhibiting stem growth and stomata opening.

It is important to note that the photosynthetic response of plants to the quality of light is complex and depends on a number of factors, including the plant species, the stage of plant development and the environmental conditions in which they are found, but in a general way its effect could be summarised as: (a) ultraviolet (UV) light, in small doses, can have beneficial effects on plants, such as increasing the production of essential oils and flavonoids. However, in high doses it can be detrimental to plants, as it can damage plant cells and DNA; (b) blue light regulates vegetative growth and the regulation of phototropism (plant response to light direction); (c) green light is not used for photosynthesis. It is reflected by chlorophyll in plant leaves; (d) red light is the most effective wavelength for photosynthesis. It is used to stimulate flowering, germination, seed production and chlorophyll production; (e) infrared (IR) light has minimal effect on photosynthesis and plant growth but can be used by plants to adjust their position relative to the light source. It is absorbed by the leaves of the plants and is used to heat the plant. In summary, a correct use of different wavelengths of light can be used to improve plant growth, development and yield.

Plants are not only sensitive to the wavelength of light they receive, but they are also sensitive to the amount of light they receive. The amount of light a plant receives can affect its growth and development. Plants that receive too much or too small light can experience stunting, wilting and other problems.

The intensity of light and its potential to drive photosynthesis is known as photosynthetic photon flux *density* (PPFD). In plants it is true that the higher the PPFD, the greater the potential for photosynthesis, so the rate of photosynthesis is directly proportional to the amount of light a plant receives. This means that if we increase the intensity of light, we also increase the rate of photosynthesis. However, increasing the light intensity to a plant can have negative effects on photosynthesis and plant health. At extremely elevated levels of light intensity, the plant can suffer photoinhibition, which is when excess light energy causes damage to photosynthetic processes and molecules in the plant. This damage can reduce the rate of photosynthesis and negatively affect plant growth and health. In extreme cases, excess light can burn the leaves of the plant, so there is a limit to the amount of light a plant can absorb.

In short, light intensity is important for plant photosynthesis, but too much light can have negative effects on plant growth and health. It is important to control the quantity and quality of light the plant receives in order to maximise its photosynthetic efficiency and prevent damage.

In conclusion, plants are dependent on the irradiance (wavelength and intensity) of light. The quality of light, including wavelength and intensity, are key factors that can affect plant growth and development. By providing the plant with more spectrally selected light intensity (some specific wavelengths), the process of photosynthesis can be enhanced, as well as controlling its morphogenesis according to the desired effect.

In this invention, holographic systems have been developed to optimise the use of solar radiation for horticulture and agriculture, which will provide crops with holographically modulated sunlight by holographic optical elements, which will adapt the incident sunlight to the geometric, intensity and spectral requirements of each crop at that moment.

Solar optimisation systems are made up of a multi-layer system of HOES, both reflection and transmission. Their function is to filter and modulate the sunlight to adapt to the spectral requirements of the crop according to its light needs for photosynthesis or photomorphogenesis.

These multilayer systems may or may not have optical magnification. If it is desired to concentrate the light to provide the crops with a higher level of luminance, the transmission hologram layer will consist of a holographic lens which can either focus the light on a small restricted area in which each agricultural unit will be located or concentrate the light on regular structures such as linear strips in which rows of crops will be located. If it is not desired to concentrate the sunlight and only to deflect the light to direct it to specific areas where the crops are located, the holographic transmission element will consist of diffraction gratings, which will produce a spectral separation of the solar spectrum, but without concentrating the light.

The transmission hologram layers (diffraction gratings and holographic lenses), due to their characteristics, have the function of spectrally separating the light, redirecting it by means of diffraction towards certain directions (depending on their configuration) and concentrating it or not, as the case may be. The layers composed of reflective holographic optical elements (holographic mirrors) have the function of blocking unwanted spectral bands of sunlight by diffraction by reflection of this band, thus preventing wavelengths that are not useful for plant development from reaching the crops.

These holographic systems for optimising the use of solar radiation for horticulture and agriculture can be installed either on a solid support, glass or any polymeric or composite material (plastics, resins, methacrylates, or other equivalent), or on an elastic or deformable support, textile support or fabrics or tarpaulins made of any polymer or composite. Both configurations are designed to be installed in structures such as greenhouses or pergolas under or inside which the crop is located. Likewise, these holographic systems for optimising the use of solar radiation for horticulture and agriculture can be installed in fixed or static structures, which have the same system for optimising the use of solar radiation, or they can be installed in dynamic systems and be interchangeable by means of remote-controlled supports or roll-up rolls with different configurations, which can be deployed or collected according to the solar spectrum that is desired to provide the crops, according to their corresponding photomorphogenesis stage, according to the state of the plant or according to the time of year.

The invention makes it possible to spectrally filter and concentrate sunlight ad-hoc for each type of crop and geographical area, in order to optimise by means of an "optical fertiliser" both the photosynthetic rate and the different photomorphogenesis processes that increase the healthy growth rate of the plant in which it is used.

This invention represents a notable advantage over current greenhouse lighting mechanisms. On the one hand, common large greenhouse plantations have plastic or textile materials in the dome of the structure in order to protect the plants from adverse weather conditions, however, these structures can mitigate the sunlight that hits the plantations and do not perform any spectral filtering of the light, generally offering the crops white light (almost the entire solar spectrum) and with levels of illuminance significantly lower than direct sunlight, which can limit their growth potential.

On the other hand, in smart greenhouses (smaller), the crops (smaller in scale) are under a structure that does not generally allow the introduction of natural light. In these greenhouses, the plants are illuminated by specific lamps, which allow spectrally selective lighting, providing the crops with more optimised illumination for their development and growth. However, this method of cultivation has two disadvantages. On the one hand, they are smaller in scale and therefore have lower production, which is not sufficient to cover the market's food demand. On the other hand, they are active systems, requiring electricity to provide lighting for the crops, which makes food production more expensive.

Finally, the lighting lamps used in these intensive cultivation facilities usually have an average illuminance of around 14,000 lx. Sunlight has a maximum illuminance of 100,000 lx (in specific conditions, on a sunny day, in summer, at the equator, or in any other situation), so the illuminance levels compared to conventional agriculture are less efficient.

Holographic systems for optimising the use of solar radiation for horticulture and agriculture will solve many of these handicaps. It will be possible to grow extensive crops, with spectrally appropriate lighting ad-hoc for each crop and with illuminance levels much higher than the lamps used until now and even higher than the illuminances provided by direct sunlight. In the concept tests carried out for this invention, using basic 20x20cm holographic concentrators, on a day when the solar illuminance (the entire solar spectrum [300 nm, 2,500nm] approximately) was 80,000 lx, it has been possible to selectively filter a spectral band of approximately 5% of the solar spectrum (105 nm spectral width approximately) and concentrate it in an area of 3x3cm, obtaining illuminances of over 1,400,000 lx. In conclusion, with the appropriate design of holographic systems for optimising the use of solar radiation for horticulture and agriculture, an optimised "optical fertiliser" designed ad-hoc for each type of crop and season of the year would be provided that achieves high levels of illuminance, free of charge and for large extensions of crops that allow a high optimisation of the development and growth processes of the crops.

*Use in horticulture and agriculture in agro-photovoltaic configuration.*

In recent times, as a result of an increasingly electrified society, there has been a considerable increase in energy demand. This fact, together with the advance of climate change, has led to a worldwide increase in the installation of renewable energy. The high returns on photovoltaic power generation, together with the progressive decrease in the cost of solar panels in recent years, has led many farmers to opt for the installation of photovoltaic fields instead of agricultural production.

As the world's population grows, so does the demand for energy, but so does the demand for food. Authorities in different countries have been concerned about the medium/long-term consequences of landowners' migration from agricultural production to energy production through the installation of photovoltaic fields.

As a result of the joint need for energy and food, the agro-photovoltaic concept has been promoted, which consists of an integrated system of agricultural production and photovoltaic solar energy generation through the joint installation of photovoltaic panels on agricultural land, whereby the solar panels are installed on the agricultural soil, allowing the cultivation of plants underneath them.

The agro-photovoltaic trend was born out of a number of factors such as the need to reduce the carbon footprint or the potential to improve agricultural yields. Agriculture is one of the main sources of greenhouse gas emissions, in this sense, agro photovoltaics can help reduce the carbon footprint of agriculture, producing renewable energy and reducing the consumption of fossil fuels. Solar panels can also provide shade for plants, which can help protect them from heat and drought, helping to improve agricultural yields, especially in arid areas. Consequently, although agro-photovoltaic technology is still under development, it has enormous potential to revolutionise the way we produce energy and feed the world's population and is a promising technology with the potential to benefit agriculture, the environment and the economy.

However, agro photovoltaics presents a problem, both photovoltaic panels and plants need the same energy source, the sun. The design of structures, configurations and installations to maximise the production of both sectors has been the subject of study and development in recent years.

This invention proposes a system for optimising the use of solar radiation for horticulture and agriculture in agro-photovoltaic configuration. This exploitation consists of a structure that fuses photovoltaic plates with holographic optical elements (HOES). As mentioned above, the biggest problem with agro-photovoltaic installations is to combine agricultural plantations and photovoltaic panels on the same piece of land. The most common configuration is to place the photovoltaic panels on an elevated structure above the crops. This design has a disadvantage, as both systems (crops and PV panels) rely on the same source of energy to function, sunlight. If the photovoltaic panels are placed on an elevated structure above the crops, they can produce shaded areas where the light does not reach the crops properly and hinder the optimal growth of the plants.

To this end, the system for optimising the use of solar radiation for horticulture and agriculture, which is the subject of the present invention in an agro-photovoltaic configuration, is made up of multilayer structures of holographic optical elements between the different photovoltaic panels of the structure that not only allow there to be no shaded areas under the structure, through the diffraction of the directional light that the sun would not provide directly, but also performs a spectral filtering, selecting the specific band of the sunlight spectrum necessary for its correct illumination. This configuration can have several variables. On the one hand, diffracting the light in light cones that focus on a point or a small region determines where each unit of the crop is located, or diffracting in light bands that concentrate the light in lamellar structures following the alignment of the crop. Alternatively, they may be systems that do not concentrate light, providing selectively spectrally targeted areas of illumination. These HOES can be on or embedded on a glass support, textile material or any polymeric material (plastics, resins, methacrylates, or equivalent).

The diffraction spectral characteristics, as in systems optimising the use of solar radiation for horticulture and agriculture, can be interchangeable by means of electronic control or roll-up rolls with different configurations, which can be deployed or collected according to the solar spectrum to be provided to the crops according to their stage of photomorphogenesis depending on the state of the plant or the time of the year.

*Use of the invention for a singular building*

To date, windows in a building have been used as an architectural element that is placed in a recess in the building, in order to cover this recess in the structure to provide the interiors with natural light and ventilation capacity (if the window can be opened), while allowing views to the outside. Efforts are constantly being made to improve their performance by adding extra accessories to control ventilation (closures), brightness (blinds, shutters, blinds, curtains, architectural elements, vinyl films, etc.) or to provide improved thermal and sound insulation capabilities. However, in a very general way, the window is still a passive structural element in the building, with no other function than those mentioned above.

The present invention is intended to evolve the traditional concept of window, transforming the passive structural element into an active element in the building, which contributes significantly to the concept of the window of the 21st century, adapted to today's society, more technological and pursuing a higher degree of welfare. To this end, we propose the design of some hybrid structures of holographic optical elements (HOES) that provide an optimisation of solar gain on some part of the visible, UV or IR spectrum, providing the window with an active character that gives it unprecedented functionalities to date.

*Use of the system for dynamic climate control*

As mentioned above, the energy sector has now become a strategic sector for the European Union. Within the energy efficiency framework, sustainable building is a key factor in reducing energy demand. Among other aspects, sustainable building aims to improve thermal insulation systems that help to minimise the energy consumption used to provide the comfort conditions that make it habitable.

In construction, a lot of effort is put into achieving materials that provide both sound insulation and thermal insulation from the outside. This insulation is relatively simple to implement in the walls by placing insulating materials between the structures, however, it is a little more complex to achieve it through the windows, so it is usually through the windows that the greatest thermal load is lost from the building.

As is well known, heat transfer (heat flow) in thermodynamics takes place through three effects; conduction; convection and radiation. A significant improvement in energy efficiency, which minimises the thermal losses of a building by insulation through windows, has been commonly achieved by designing windows with double or triple glazing (by filling the gap with a vacuum or a gas). This design minimises thermal losses through convection and heat conduction. However, of the three forms of heat flow, the one with the highest incidence is radiation, which is practically unaffected by this configuration. To overcome this fact, radiation filtering systems are implemented in the windows by attaching filters. These filters, by blocking part of the radiation, will logically help to prevent this radiation from reaching the interior and, therefore, there will be less radiation contributing to the increase in temperature. As mentioned above, solar radiation arriving at sea level is composed of the ultraviolet (UV), visible and infrared (IR) parts of the electromagnetic spectrum, although not all of them arrive with the same intensity. Each of these radiations contributes to heat transfer. If we suppress all or part of some radiation, as is to be expected, less warming will occur.

The sunscreens used in the building sector act in this way, blocking part of the spectrum or a percentage of the intensity of all or part of it. How it blocks, and what part it blocks, will influence the functional characteristics of the window. For example, blocking radiation (the element absorbs it and will increase its temperature) is not the same as reflecting it (the element does not increase its temperature).

Commonly implemented filters can function in two separate ways. On the one hand, there are filters that block all radiation below a certain value, e.g. ultraviolet (UV) radiation. These filters are often sold as "UV protection filters", which protect furniture in indoor areas, as the UV part of the sun, being the most energetic radiation, can contribute to degrade materials faster. On the other hand, there are filters that filter out the entire solar spectrum. These filters, by preventing a percentage of the solar radiation from entering the interior, will, of course, reduce the heating effect of interiors. For the marketing of this type of filter, graphic examples are often given in which the solar heat is blocked by the window and the visible radiation is transmitted to the interior of the house. This is not entirely correct, what they do is a filtering of part of the total spectrum of the sun (visible, UV and IR). As we have already mentioned, by blocking at least a percentage of the radiation (part of the spectrum), less radiation will be allowed to enter the interior and, therefore, will not contribute as much to the increase in temperature. Consequently, it is not that they prevent solar heat from entering and light from entering, but they minimise the overall amount of radiation reaching the interior.

These solar filters are a partial solution to the problem of thermal insulation by radiation; however, the implementation of these filters has two drawbacks. The first disadvantage of this type of filter is that they filter the entire spectrum, preventing part of the visible spectrum from entering the interior, thus reducing the amount of light that enters through the window and leading to a logical darkening of the interior. A second drawback is that they are not energy efficient. As their operation is static and permanent, they work in summer as well as in winter. In summer, their effects are beneficial, since, by blocking part of the incident radiation, they provide less heating indoors and therefore save energy costs in freezing air conditioning. However, in winter they also block radiation and prevent radiation from entering and heating the interior, thus increasing energy costs for heating and lighting systems.

The optimised solution would try to filter out each radiation band individually. In this sense, ideally, the aim is to be able to let visible radiation through and block the UV and IR spectrum. This would achieve greater energy efficiency due to two effects: **(a)** all the light needed to illuminate interiors would be let through, minimising the need for artificial lighting; and **(b)** incident radiation would be reduced, minimising the amount of radiation that increases the temperature indoors.

In this invention we propose a holographic system for optimising the use of solar radiation for dynamic climate control that provides an advantage in the use of holograms in glazing or windows. Due to its angular sensitivity, the hologram can function as such for certain angles or directions and not for others, being able to obtain a dynamic or selective application depending on the time of year or period of the day, being a much more complete and dynamic solution than the solutions implemented to date, as they can maximise energy efficiency in the building sector.

The holographic system for optimising the use of solar radiation for dynamic climate control would be made up of multilayer structures of holographic optical elements by reflection, which would be oriented in such a way (depending on the latitude of the window and the time of day for which it is to be protected, a configuration that may vary depending on the geographical location, orientation and geometry of the building, orientation and geometry of the building) so that, taking advantage of the spectral selectivity of the hologram, for summer periods in the central hours of the day (at a given height and azimuth) the hologram reflects all or part of a specific spectral band of the solar spectrum and for other seasons or times of the day (at a different height and azimuth) the hologram allows practically all solar radiation to pass through.

This would allow solar radiation to penetrate the interior rooms of a building, helping to heat the home or office and therefore reducing the energy that should be used to heat the rooms, and in summer periods diffract all or part of the desired band of solar radiation towards the outside, preventing it from being introduced into the interior and therefore, as less radiation is introduced, it will not heat up as much as the outside temperature, thus saving energy in cooling systems. This invention represents a means of adaptive and efficient energy efficiency in the building sector.

As a complement to the dynamic climate control property, this invention aims to evolve the traditional concept of the window and adapt it to modern times, giving the window a more active role in the building, providing new design and functionality options that fit more efficiently with today's more technological, sustainable and interconnected society.

*Use of the invention in radiation rebroadcasting*

In our daily lives, we will experience many reflections of sunlight on a variety of reflective surfaces in our surrounding environment, including everything from shop windows, glass facades, areas of metal cladding, to small reflections that cause annoying glare from our mobile phone screens. The vast majority of the time, these reflections are only a nuisance to passers-by or users, however, due to the scale of the buildings they can be a serious safety issue for people.

When glare from the sun is produced by reflection off a glazed building façade or a large area of metal building envelope, it can produce a glare of such magnitude that it can cause a serious safety problem. If drivers on the road, train drivers, aircraft pilots approaching for landing or passers-by are blinded, even momentarily, by glare from a reflective building, it can be a life-threatening situation for their safety and that of others, not to mention the discomfort to occupants of adjacent buildings.

Two types of glare can be broadly classified. Annoying glare, which causes visual discomfort without necessarily affecting the ability to see, and disability glare, which occurs when a bright light source is scattered in the eye, making it difficult to see everything else.

Outdoors, disability glare is the most serious source of safety problems, as it can affect the ability of motorists to drive safely. It is particularly important in places where a driver has to make a key split-second decision, for example, approaching a junction, traffic light or pedestrian crossing. It can also affect train drivers, especially if they are looking at light signals. Although, in general, because of the time they have to react, disability glare is less of a problem for pedestrians, depending on the circumstances it can be a serious problem, especially if it occurs when they are looking along a street before crossing it and do not see an approaching vehicle due to the glare of the sun in their direct line of sight.

Nuisance glare a priori may be a less pressing problem because it does not affect the ability to see, however, it can be significant when it involves continuous viewing of outdoor space from a fixed viewpoint, e.g. in security surveillance.

Depending on the surface conditions, light reflections can be specular or diffuse. A specular reflection occurs when the surface on which the light strikes is perfectly polished, as occurs for example in glass or metallic surfaces, reflecting the light rays symmetrically with respect to the surface normal (according to Snell's law), producing images exactly the same as the objects from which they come (although symmetrically inverted). Diffuse reflections occur when the surface on which the light is incident is not smooth, but has roughness, as occurs for example in bricks or matt coatings. In this case, all incident rays comply with the laws of reflection, but because the surface is not uniform, the reflected rays go out in different directions, scattering the light in many directions and giving rise to distorted images, therefore diffuse reflection is less likely to cause disabling glare.

In general, it is possible to reduce reflected glare by applying certain measures such as reducing glazing areas, using a matt coating, reorienting building elements to avoid reflections, replacing sloped glass areas with vertical or near-horizontal glass, replacing the glazing or coating with low specular reflectance, using a low-reflectance film or ceramic coating on the glass, using diffusing or frosted glass, or installing external shading such as louvers, vertical louvers or Venetian blinds.

All these measures limit the architects' design options, physically limiting their range of creativity, limiting the functionalities of the building (such as daylighting the building), increasing the cost of construction or maintenance, or may pose a safety hazard if not implemented for pedestrians (because they can currently blind pedestrians), guests, drivers and others.

To solve this problem, in this invention, we deal with holographic systems for optimising the use of solar radiation for radiation rediffusion in which we use holographic optical elements which aim to mitigate the adverse effects of solar reflection on façades. For this purpose, two types of holographic systems for optimising the use of solar radiation will be available.

On the one hand, those that transform specular reflection into diffuse diffraction by means of HOES. This configuration is composed of a multilayer HOES system in which the incidence of sunlight is diffracted in multiple directions, minimising the illuminance of the reflection of the glass in each direction and managing not to concentrate the sunlight in small areas due to the geometry of some installations. This minimises glare and heating effects due to a high concentration of light in a single direction of reflection. This diffuse diffraction can be configured as required by designing HOES to diffract all wavelengths in the same directions or in different directions depending on the wavelength. This not only minimises the level of diffracted light per unit area but can also be spectrally filtered to provide the glass with chromatic diversity and functionality, either functionally to use some part of the solar spectrum for a particular purpose or for aesthetic purposes.

On the other hand, there are holographic systems that optimise the use of solar radiation by diffracting the sunlight in a single or several specific directions (depending on the case). These systems, due to the properties of holographic technology and the fact that they are based on diffraction for their operation, can diffract light in directions that conventional optics could not, as it is subject to the properties of reflection and refraction that limit these reflection geometries to specific directions depending on the direction of the incident beam. Through these systems, we can divert diffracted light to areas that are not hazardous to the integrity of users or surrounding structures and thus provide engineers and architects with greater freedom in the design of structures, since the glasses could be designed to cause no harmful effects while respecting the design geometries. These systems are composed of a multilayer structure of HOES which act on the different wavelengths of interest in each case and their diffraction directions, being able to diffract several wavelengths in the same direction or in different directions, being able to concentrate the different wavelengths in one area, if necessary, or to concentrate them in different areas according to the spectral band we want. These properties facilitate the use of these radiations to be used in other processes if required.

*Use of the invention in indoor radiation rediffusion*

An adapted version of the holographic radiation re-broadcasting system for indoor environments will allow the use of part of the light spectrum, as was the case for holographic radiation re-broadcasting systems installed outdoors, but adapted to a specific purpose, the re-broadcasting of wireless signals.

Wireless networks play a particularly key role nowadays. We have different technologies that allow us to send and receive information wirelessly, as well as to connect to the Internet. Nowadays, due to its common presence in homes and work environments, Wi-Fi (Wireless Fidelity) technology is well known to the general public. It is a wireless technology that uses radio waves to transmit data through the air. It is widely used in environments such as homes, offices, airports, coffee shops and many other places to provide internet connectivity conveniently through devices such as laptops, smartphones, tablets, etc. Wi-Fi technology uses the radio frequency spectrum to transmit data, typically in the 2.4 GHz or 5 GHz bands.

However, Wi-Fi networks have certain limitations due to the use of radio waves for their operation, which has led to interesting advances in connectivity through wireless networks over the last decade. One of these, perhaps the most striking, is Lifi (Light Fidelity). Lifi is an emerging wireless technology that uses visible or near-infrared light to transmit data at high speed. The principles of this technology are based on modulating the intensity and frequency of visible or infrared light at an extremely fast rate, between 400 and 800 THz. This modulation, invisible to the human eye, is detected by special photoreceptors in compatible devices.

While Wi-Fi uses electromagnetic waves in the range of radio wave bands (2.4 GHz and 5 GHz frequency) for data communication, Lifi is an optical communication technology (Visible Light Communication, VLC), operating between wavelengths in the range of 380 nm to 780 nm (visible and infrared (IR) spectrum) for data communication between LEDs (signal transmitting device) and photo detectors (receiving devices). Due to operating with shorter wavelength electromagnetic signals, Lifi waves have a higher frequency and therefore transfer data very quickly and securely due to the operation of the optical LOS (Line of Sight) signals, consequently Lifi is used to exchange data faster and more securely at a much lower power level than Wi-Fi.

Another advantage of Lifi over Wi-Fi is reduced spectrum congestion. With the increased use of Wi-Fi, wireless networks can suffer from congestion problems in the radio frequency spectrum, increasing the possibility of uncomfortable interference. Using the visible light spectrum for Lifi offers a less crowded alternative and greater availability of channels to transmit data. The use of Lifi communication can be useful for special applications operating in environments sensitive to electromagnetic interference, such as hospitals, manufacturing plants, aircraft or research facilities, where the use of traditional wireless devices may be restricted. In terms of security, Lifi offers certain advantages over Wi-Fi, as light does not pass through walls like radio waves. This reduces the likelihood of the Lifi signal being intercepted by unauthorised persons, which can improve the security of networks in certain sensitive environments, such as offices, banks, military or law enforcement facilities, etc.

Despite these advantages, Lifi also has limitations - it does not work in direct sunlight, its transmission range is short, or the need for a direct line of sight between the transmitter and receiver - which can make it difficult to deploy in some environments because office furniture can block the optical signal, causing a loss of coverage for Lifi-connected devices. Nevertheless, Lifi is a promising technology that is under development and could complement or improve existing Wi-Fi networks for certain specific cases. This invention seeks to implement an adaptation of holographic systems for optimising the use of solar radiation in indoor environments for handling, rediffusion or blocking of Lifi signals.

As we have mentioned, one of the drawbacks of Lifi communication is that, as it is visual communication through light, a direct line of sight is needed between the transmitter and the receiver. In an office or home, the furniture, structure, layout, etc., could obstruct the optical signal and cause an interruption in the communication, resulting in a loss of coverage for the devices interconnected by Lifi. To overcome this fact, the holographic systems for optimising the use of solar radiation for indoor environments are composed of a multilayer system of holographic optical elements by reflection, which are tuned to provide reflective diffraction in the Lifi communication operating band, either the visible spectrum or the infrared spectrum, depending on the emission device. These HOES may be of three types. On the one hand, reflective HOES will be magnified, i.e. they will be divergent holographic mirrors tuned to the emission bandwidth of the Lifi device. These HOES, when the Lifi signal is incident on them, will redirect the signal in different directions towards the interior of the room due to their divergence property, providing Lifi signal coverage in those shadow areas where the direct signal from the emitter did not reach.

On the other hand, reflection HOES will be composed of a regular tessellation of flat holographic mirrors, which, within the tessellation, will each be independently oriented in different directions. This configuration will, like divergent HOES, provide connectivity to the shadow regions of the Lifi signal. The difference between the two configurations lies in the fact how the signal is rediffused, on the one hand by divergent HOES and on the other hand by a tessellation of collimated HOES. A third configuration is a hybrid of these two. It would consist of a regular tessellation of reflection HOES, each with built-in optical magnification, which can diffract the incident Lifi signal in multiple directions.

These holographic systems for optimising the use of solar radiation for radiation rediffusion used in interiors can be used either embedded in the furniture of the office or home, in decorative elements or implemented in windows, partitions and other structural elements. This configuration not only provides Lifi coverage in areas where the transmitter's Lifi signal has no direct line of sight, but also represents a fundamental missing piece in the security configuration provided by Lifi wireless transmission systems. As mentioned above, one of the advantages of Lifi is that due to the fact that they are based on light or infrared signals, they operate with shorter wavelength electromagnetic signals than Wi-Fi. This means that Lifi signals have a higher frequency and therefore a higher data transfer rate or higher transmission speed than Wi-Fi waves. This fact makes it possible to implement more secure cryptographic systems that make Lifi transmissions more secure than other wireless technologies based on radio waves.

This security property is coupled with the fact that light does not pass through walls like radio waves, minimising the likelihood of the Lifi signal being intercepted by unauthorised persons and gaining access to the systems or servers of a company, bank, or others, thus configuring each room or office as an internal telecommunications security bunker. However, there is a security gap in this situation. Increasingly, offices, offices, or buildings are being built with glass walls, which do allow the passage of optical signals, breaking the possibility of "bunkerisation" of Lifi signals and opening up the possibility of Lifi signal propagation to the outside, which can be tapped. With this invention, by spreading the Lifi signal inwards, the windows would be opaque to the Lifi signal (they would act as a mirror for them), making it impossible for it to escape to unwanted spaces. This would enable the signal to remain watertight in the operating environment, providing security in wireless telecommunications under Lifi technology.

*Use of the invention for environmental integration*

Cities located in migratory bird flyways such as Chicago, Houston, Dallas, New York or Toronto, which are located at key points along the migratory routes that more than 250 bird species cross twice a year, face unique biodiversity problems, one of which is related to building and is the impact that glazed buildings can have on migratory birds.

Glass buildings in modern cities are often a death trap for birds, as thousands of birds die every day when they crash into buildings. In the United States alone, scientists estimate in rough figures that between one hundred and almost one billion birds are killed each year when they collide with the country's skyscrapers.

Birds during their migratory routes can collide with glass in buildings, often resulting in severe injury or death of the birds. Untreated glass is responsible for virtually all bird collisions with buildings due to a variety of factors. Mirrored glass is often used to make a building "blend in" with an area by reflecting its surroundings. Unfortunately, this makes such buildings especially lethal to birds. This type of glass is reflective at all times of the day confusing birds with reflections of the sky, trees and other habitat features with reality, so they are unable to discern between a reflection or a real situation, causing them to collide. Mirrorless glass can be highly reflective at one moment and, at other times, appear completely transparent or dark, depending on the time of day, weather, viewing angle and other variables. Because of its transparency, birds are unable to detect glass as a solid object and therefore avoid it. Low-reflective glass may be less dangerous in some situations, but it does not actively deter birds and can create a "pass-through effect", which appears as a dark void through which to fly.

The problem has become so significant that engineers, architects and authorities have sought and developed various strategies to mitigate it, mainly centred on the adoption of building practices that seek to protect wildlife, especially migratory birds, and minimise the negative impacts of buildings on their urban environment. These can incorporate measures such as the placement of screens or netting on windows, the creation of physical barriers on balconies or terraces, the installation of vegetation that attracts birds away from collision areas, and adequate lighting to reduce night-time confusion of migratory birds.

A commonly employed solution in this type of construction is the use of special glazing, which often has features that make it more visible and detectable to birds, helping them to avoid collisions, without significantly compromising visibility to humans. These glasses may have patterns, markings or coatings that reflect light differently or are perceptible to birds.

The spectrum of vision of birds and humans is different due to differences in the structure of our eyes and the types of photoreceptor cells we possess. Humans have three types of cones that allow us to see colours in the visible spectrum, mainly in red, green and blue wavelengths of light. In contrast, many birds have four types of cones, giving them tetrachromatic vision. In addition to the three types of cones present in humans, birds have a fourth type of cone that is sensitive to ultraviolet (UV) wavelengths. This means that birds can perceive colours in the ultraviolet range of the spectrum, which is invisible to us. This difference in the spectrum of vision between birds and humans is relevant to understanding how some of the building solutions that consider the patterns and features visible to migratory birds are developed.

Architects have long been looking for solutions that are safer and help reduce the risk of bird strike without having to give up the aesthetics and functionality of glass buildings. Some of these solutions often have ultraviolet (UV) patterns designed to be visible to birds, but do not significantly affect visibility from inside buildings. The patterns, markings or films are subtle and do not obstruct the view or alter the overall appearance of the glass. There are many companies that employ such solutions, for example, to make glass more visible to birds, allowing them to avoid collisions or reduce their speed when flying close to buildings. By making glass more detectable, this can reduce the number of accidental collisions and help protect migratory wildlife in urban environments.

This invention aims to create a new diffracting glass that uses a holographic system to optimise the use of solar radiation for environmental integration formed by holographic optical elements (HOES). Thus, taking advantage of its properties, the glass will not only diffract the part of the solar radiation spectrum required in each case, both in wavelengths, the visible spectrum band (400 nm to 700 nm), the spectral band comprised by the near infrared (greater than 700 nm) and the ultraviolet (UV) spectral band (less than 400 nm), but also in specific geometries, being able to redirect solar radiation (or part of the solar radiation) to directions that conventional optics do not allow, concentrating or diffusing it as required, being able to take advantage of the diffracted radiation to feed other types of subsystems, applications or flora to be illuminated with this radiation.

HOES shall consist of a multilayer system of holographic elements that provide the desired diffraction pattern, in terms of visual coverage, spectrum and rediffusion of radiation. These HOES may have a varied diffraction pattern, ranging from a smooth pattern, with uniform diffraction throughout the HOE, a specific geometric design pattern, being able to diffract light in a pattern of dots, bands, spider webs, etc., or a pattern of a solid figure, being able to holographically project a 3D image of a solid figure to serve as a light cue for birds to identify the presence of the glass. All these patterns are designed to make the glass building structures visible to humans and birds or only to birds, while remaining transparent in the visible spectrum and therefore to humans.

*Use of the invention in photovoltaic power generation*

As mentioned in the introduction, due to the growing concern about climate change and the need to find alternative energy sources to fossil fuels, in recent times a strong effort has been made in the development and installation of renewable energy sources. Among all of them, photovoltaic energy is one of the most promising renewable technologies and its importance has increased in recent years. Due to a strong commitment to the installation of photovoltaic panels in all countries, numerous efforts are being made by engineers and companies to increase the efficiency of photovoltaic panels to enable higher electricity production with the same deployment. In order to maximise the production of photovoltaic energy, we need to take a closer look at how photovoltaic energy generation actually works.

Of all renewable energies, those that use the sun's energy are photovoltaic and solar thermal. If we want to develop these technologies to maximise their performance, we need to know how they work and optimise each step in their energy generation process. Virtually all renewable energy sources, whether wind, tidal, hydro or geothermal, generate energy in a similar way, by producing alternating current through an inductor that rotates according to the motion of a turbine, which rotates depending on the force of the wind, sea, waterfalls, steam from nuclear power or geothermal energy. However, photovoltaic power generation technology is uniquely different from the others, as it uses the photoelectric effect to generate direct current. When solar radiation hits the photocell, the photoelectric effect causes it to release electrons, which are then directed and used to generate direct current.

In recent times, a great deal of effort is being put into maximising power generation processes, mainly in improving the efficiency of photovoltaic cells, whose current efficiency is generally around 14% - 17% for the most common photocells on the market (this refers to the photon-electron conversion rate of the semiconductor material of the photocell), as well as improving the different connections to the grid. Virtually all of this innovative effort is focused on the photon-to-electron conversion rate through the manufacture of new semiconductor materials that improve the conversion rate, but there has been virtually no significant progress in the treatment of solar radiation before it reaches the photocell.

If the photovoltaic energy generation process is analysed globally, this process is made up of two distinct stages, the optical stage, which would be located in the sun-photocell phase, and the electrical stage, which would be located in the photocell-grid phase.

The overall efficiency of the system will be conditioned by the maximisation of the processes of the various stages. Developing mainly one part limits the final generation potential of the photovoltaic technology. A development in the optical stage of the overall process will provide the semiconductor with the "optimised fuel" for optimal operation, maximising the overall process efficiency and complementing current developments in semiconductor and photon-electron conversion rate.

In general, the performance of photovoltaic systems is affected by a number of factors, such as location, orientation, tilt of the panels, quality of the components and the amount of sunlight received. Factors such as location, orientation, tilt of the panels and the amount of light received are factors related to the sun-photocell stage. It has been shown that both the amount of light reaching the photocell and the angle of incidence that the photocell has with the sunlight are crucial factors in obtaining higher photovoltaic performance.

Manipulation of the light that photovoltaic cells work with has been shown to produce increases in efficiency. The efficiency of a solar panel can be improved if the light is concentrated on the photocell. Moreover, the smaller the space needed to install the photovoltaic modules, the lower the overall cost of the system. As is well known, silicon panels operate at approximately 10% efficiency. New semiconductor materials have achieved efficiencies of around 14-17% (photovoltaic panels on the market) and it has been shown that concentrating solar energy using a concentrator system would increase efficiency to 20-25%.

Solar concentrating elements have been developed using devices based on conventional optics, such as Fresnel lenses. These devices have not been widely deployed because, although it has been proven that solar concentration increases photovoltaic efficiency, concentrating the entire solar spectrum produces a thermal increase that leads to a loss of efficiency. For this reason, concentrating photovoltaic systems must be installed in conjunction with heat dissipation systems, which makes the entire system considerably more expensive and is not usually used in conventional and private installations. This thermal increase is due to the fact that photocells are spectrally selective, i.e. not all the solar radiation that reaches them generates electrical energy.

This "non-useful" radiation, if received in substantial amounts, can cause a temperature increase leading to additional losses. Numerous studies have been conducted on how splitting the solar spectrum into its various components to provide the photocell with the "optimised fuel" increases efficiency by up to about 30% - 34%.

By multiplexing both measurements, highly efficient photovoltaic systems could be obtained. Due to the fact that photovoltaic modules possess spectral selectivity, countless researchers have opted for holographic optical elements such as solar concentrators, solar holography, developing countless experimental devices and patents with holographic concentration, obtaining efficiency increases of up to 40/50 %, reducing the size of photovoltaic modules by up to 50%. Holographic concentrators are the ideal solution, as they can jointly produce spectral filtering with high concentration levels, thus increasing the final efficiency of the system. Comparative studies have been carried out on the operation of concentrator systems with Fresnel lenses (conventional optics) and holographic concentrators, showing that in less than 20 seconds, the photovoltaic module with Fresnel lens concentration dropped its performance by half, while the holographic modules-maintained efficiency at around 95% throughout the test.

Consequently, in order to develop photovoltaic power generation technology more efficiently, given the nature of the energy source (the sun) and its operation (photoelectric effect), processes and devices must be implemented which can control electromagnetic waves corresponding to the solar spectrum. By identifying the energy band of the solar photocells and making it coincide exactly with the band of action of the holographic concentrator, the maximum output efficiency would be obtained. The results of countless research studies show that holography is the best way to convert solar energy into electricity. However, none of the state-of-the-art systems (1) work by reflection; and (2) seek to cool the photovoltaic cell.

Holographic systems used in photovoltaic power generation have a spectral separation approach to solar radiation or holograms are used to introduce light into a supporting glass and use it as a waveguide to bring solar radiation back into the photocell (e.g. bifacial photovoltaic panels), which would otherwise miss the solar radiation. In all of them, diffraction gratings or holographic lenses are used to separate or deflect the electromagnetic spectrum. Such holographic lenses or diffraction gratings are transmission holograms.

In this invention, we are going to use reflection holograms. As mentioned above, commercial photovoltaic cells have a current efficiency of around 14% - 17%. This data is provided by the manufacturer, however, there is an important detail to consider. These values provided by the manufacturer are a theoretical yield measured under controlled conditions in a laboratory, called standard test conditions, which are measured under an irradiance of 1,000 W/m2, a temperature of 25°C, an AM 1.5 illumination spectrum of a test lamp or solar simulator and an angle of incidence of normal light (90°) to the surface of the photocell. These values show that the photocell, while operating under these conditions, will obtain these efficiencies, however, in an operating environment, the efficiency in photovoltaic production will not be the same. Standard test conditions are ideal, and in the real world, due to varying environmental conditions, photovoltaic panels are exposed to a number of factors that can reduce their efficiency, such as temperature, solar irradiance, illumination spectrum or angle of incidence.

The temperature of the PV panels in the real world is higher than the temperature of 25°C used in standard test conditions. This is because the panels absorb heat from sunlight. Operating temperature can contribute 15-20% to the reduced efficiency of polycrystalline silicon modules.

The power loss due to temperature of a photovoltaic panel can be calculated using the following formula:

$$\textit{Pérdida de potencia} = I \times V \times \alpha \times (T - T_0)$$

Where I is the panel current, V is the panel voltage, a is the temperature coefficient, T is the actual panel temperature and T0 is the reference temperature (25°C).

The actual solar irradiance is lower than the 1,000 W/m2 irradiance used in standard test conditions. This is because sunlight is attenuated by the atmosphere and clouds. In addition, solar irradiance varies according to the time of year, throughout the day, geographical location or atmospheric conditions. The combined influence of temperature and irradiance can lead to a variation in the performance of the photovoltaic module between -15% and +5%.

The angle of incidence of the actual sunlight is different from the normal angle of incidence (90°) used in standard test conditions. This is because sunlight is reflected and scattered by the earth's surface. The fact that solar radiation strikes the surface of a PV module at an angle other than 90° implies added losses (higher losses at higher angles of incidence). Angular losses increase with the degree of soiling.

The illumination spectrum of a real operating environment (solar spectrum) differs significantly from the AM 1.5 illumination spectrum used by lamps under standard test conditions. The solar spectrum can vary due to changing atmospheric conditions or the angle of incidence with respect to the atmosphere. On the other hand, photovoltaic devices, being spectrally selective, the current generated differs for each wavelength of the incident solar radiation spectrum (spectral response). This is why a variation in the solar spectrum can affect the response of the photovoltaic cells, giving rise to energy gains or losses, depending on the case.

In conclusion, the response of the PV panel under real operating conditions may differ from the technical specifications obtained in tests under controlled conditions. In general, the efficiency of PV panels in the real world is around 80 to 90% of the efficiency measured under standard test conditions.

In this invention, we will not try to increase the nominal performance of the photocell as in other inventions, but we will try to minimise the losses produced by some of the various environmental factors, such as temperature increase, typical of a real operating environment, consequently, this invention will try to increase its performance ratio (PR).

The performance ratio (PR) of a PV panel is a measure of its performance under actual operating conditions. It is defined as the ratio of the actual power generated by the panel to the theoretical power that would be generated if the panel used under standard test conditions.

$$PR = \frac{P_{real}}{P_{teórica}}$$

Where PR is the performance ratio, $P_{real}$ is the actual power generated by the panel and $P_{Theoretical}$ is the power that would be generated if the panel used under standard test conditions. The PR is expressed as a percentage and is usually in the range of 70 to 85%. A high PR shows that the panel is efficient under actual operating conditions.

The temperature of the photovoltaic panels in summer in hot areas can be up to 50°C. The maximum temperature losses that have been recorded are in the order of 20%. These losses are due to the fact that heat causes electrons to move faster, which reduces the potential difference between the panel terminals. As a result, the power generated by the panel is lower.

Analogous to the procedure used in systems for optimising the use of solar radiation for dynamic climate control, the use of holographic optical elements by reflection (RHOES, *REFLECTION HOLOGRAPHIC OPTICAL ELEMENTS*) is intended to reduce the amount of radiation received by a photovoltaic panel for certain times of the year when solar irradiance is very high, for example in the summer months in countries located in hot areas, and thus avoid excessive overheating of the panel, minimising the losses produced by thermal effects and consequently increasing the PR of the photovoltaic panel, bringing it progressively closer to the theoretical efficiency given by the manufacturer.

For this purpose, the invention will consist of hybrid or composite RHOES that can be deposited either on top of the existing panel or form part of the protective glass of the photovoltaic panel, in order to attenuate by % both the solar illuminance and the desired spectral band, allowing the photovoltaic panel to receive the "optimised fuel" for optimum operation, both spectrally and in quantity of light, thus avoiding losses due to thermal effects caused by both unnecessary spectral bands and excessive illuminance.

The advantage of using holograms by reflection in this invention lies in the fact that, due to its angular sensitivity, the RHOE can function as such for certain angles or directions, reflecting part or all of the solar radiation of one or several specific spectral bands, and not for others, being able to obtain a dynamic or selective application depending on the time of year or period of the day, being a much more complete and dynamic solution than the solutions implemented to date, being able to maximise energy efficiency in the photovoltaic energy production sector.

*Use in photocatalytic processes (water disinfection and hydrogen production)*

Sunlight can be used directly to purify water. The main mechanisms of solar disinfection could be summarised in three effects; photoinactivation, whereby sunlight can directly inactivate pathogens, damaging their cellular structures, photo disinfection, whereby sunlight can generate free radicals, which are highly reactive molecules that can destroy pathogens, or photooxidation whereby sunlight can oxidise pathogens, damaging their cellular structures.

There are three well-known methods that use sunlight to purify water: solar water disinfection (SODIS, *SOLAR WATER DISINFECTION*), solar photocatalysis and solar photo electrocatalysis. All of them use sunlight to remove pathogens from water, but there are some key differences between them.

*SODIS processes*

Sunlight can break down water molecules and form free radicals, even without the presence of a photocatalyst. SODIS uses solar energy to eliminate pathogens that cause waterborne diseases. This method is ideal for disinfecting small quantities of water intended for human consumption, based on the photochemical effect of sunlight on water.

As mentioned above, sunlight is an electromagnetic wave whose wavelength ranges from 300 to 2500 nanometres. Several of these wavelengths are absorbed by water, mainly the ultraviolet (UV) part of the sunlight spectrum, leading to the formation of free electrons and protons, which can combine to form free radicals, such as singlet oxygen, hydrogen peroxide or nitric oxide. Free radicals are highly reactive molecules that can damage the cellular structures of pathogens and can destroy bacteria, viruses and protozoa in water. Singlet oxygen is a highly reactive form of oxygen that can oxidise lipids and proteins in pathogen cells. Hydrogen peroxide is an oxidant that can damage the DNA of pathogen cells. Nitric oxide is an oxidant that can damage proteins in pathogen cells.

The SODIS process can decompose water molecules by the direct use of sunlight forming free radicals even without the presence of a photocatalyst, combining the three mechanisms (photoinactivation, photo disinfection, photooxidation, photooxidation) to achieve effective disinfection of water from pathogens such as bacteria (*Salmonella, Shigella, Escherichia coli or Vibrio cholerae*), viruses (rotavirus, adenovirus or enterovirus) or protozoa (*giardia lamblia* or *cryptosporidium parvum*).

To carry out the SODIS process, a transparent container must be used to allow sunlight to penetrate the water, and, at the same time, they must be large enough for the water to absorb sufficient sunlight. This is why plastic containers are a desirable choice for the SODIS process. Adding a small amount of sand or gravel to the container to help disperse the light can increase the effectiveness of the SODIS process. The container should be closed tightly to prevent air from entering the water, as air can reduce the effectiveness of the SODIS process. Finally, the sun exposure time required for effective disinfection will vary depending on sunlight intensity, water temperature and pathogen concentration, so generally, based on average sunlight intensity values, to ensure adequate disinfection it is recommended to expose the water to sunlight for at least six hours.

The SODIS process is a safe, simple and cost-effective method of water purification and is a good option for water disinfection in rural and resource-poor settings. It is an affordable and sustainable alternative to conventional disinfection methods such as chlorine or chlorination.

*Solar photocatalysis*

Like solar water disinfection (SODIS), photocatalysis uses sunlight to generate free radicals, but unlike SODIS, photocatalysis uses a photocatalyst, a material that can accelerate a chemical reaction by absorbing light, which accelerates the generation of free radicals making the process more effective in eliminating resistant pathogens.

The solar photocatalysis process occurs in two stages. In the first stage, the photocatalyst is exposed to and absorbs sunlight. In a second stage, the absorption of light by the photocatalyst generates free electrons and protons, which combine to form highly reactive free radicals, such as singlet oxygen, hydrogen peroxide and nitric oxide, which can damage the cellular structures of pathogens, such as bacteria, viruses and protozoa, causing their inactivation or destruction.

Photocatalysts are photoactive materials, which means that they can absorb sunlight and generate free radicals. They possess a forbidden energy band, which, in the context of photocatalysis, is important because it determines which wavelengths of light can be absorbed by the photocatalyst. Light waves with a wavelength equal to or shorter than the wavelength of the bandgap energy can be absorbed by the photocatalyst.

The most commonly used photocatalysts in solar photocatalysis are titanium dioxide ($TiO_2$) and zinc oxide (ZnO). $TiO_2$ has a bandgap of 3.2 eV, which means it can absorb UV light with a wavelength of 380 nm or less. This makes it suitable for drinking water purification, as UV light is present in sunlight. Also, ZnO has a forbidden band of 3.3 eV, which means that it can absorb UV light with a wavelength of 370 nm or less. This makes it suitable for the removal of organic pollutants, as UV light is effective in breaking the chemical bonds of organic pollutants.

In addition to TiO2 and ZnO, there are other photocatalysts that can be used in solar photocatalysis. These include niobium oxides (Nb2O5, NbOx), tungsten oxides (W03, W18O49), silicon oxides (SiO2, SiOx), iron oxides (Fe203, Fe304) or carbon compounds (C60, C70). These photocatalysts have different forbidden bands, which means that they can absorb light of different wavelengths depending on the case.

Solar photocatalysis is a sustainable process that uses sunlight as an energy source. It is a versatile process that can be used for a variety of applications, such as purifying drinking water, removing pollutants from wastewater (such as organic matter, heavy metals and volatile organic compounds), removing pollutants from air (such as nitrogen oxides, sulphur oxides and volatile organic compounds) or producing hydrogen from water.

*Solar photo electrocatalysis*

Both photocatalysis and photo electrocatalysis are two processes that use light to generate chemical reactions. The main difference between the two processes is that photocatalysis does not require the presence of an electrolyte and an electrode, while photo electrocatalysis does.

In photo electrocatalysis, the semiconductor absorbs sunlight and generates free electrons and protons. The free electrons flow through the semiconductor to an electrode, generating electricity. The protons remain on the surface of the semiconductor and react with water to form free radicals. The function of the electrolyte is to transport the free electrons generated by the semiconductor to the electrode, generating electricity.

Photocatalysis is a simpler and more affordable process than photo electrocatalysis. However, photo electrocatalysis is a more versatile process, as in addition to generating free radicals, electricity is generated, which can be used for other chemical reactions, such as hydrogen production or water purification, as it combines the benefits of solar photocatalysis and electrolysis.

The most commonly used semiconductors in photo electrocatalysis are titanium dioxide (Ti02, 3.2 eV bandgap, can absorb ultraviolet (UV) light with a wavelength of 380 nm or less) and zinc oxide (ZnO, 3.3 eV bandgap, can absorb UV light with a wavelength of 370 nm or less) are the most commonly used semiconductors for drinking water purification, as they are stable and low-cost materials. Silicon oxide (SiO2, 9.1 eV bandgap, can absorb visible light with a wavelength of 380 nm or less) is used for hydrogen production, as it has a lower bandgap than TiO2 and ZnO. Tungsten oxide (W03, forbidden band is 2.8 eV, can absorb visible light with a wavelength of 420 nm or less) is used for the degradation of organic pollutants, as it also has lower forbidden bands than TiO2 and ZnO. Nickel oxide (NiO, 3.7 eV forbidden band, can absorb visible light at a wavelength of 400 nm or less) is used for the production of energy from sunlight.

These three methods of water purification differ in their operation and performance, however, what they do have in common is the use of solar radiation for their operation, more specifically the UV spectral part of sunlight. The three processes have a limitation in terms of their performance, the amount of solar radiation they receive, since only the most energetic wavelengths of sunlight, such as ultraviolet (UV) radiation, can produce the desired effects, and this, with respect to the total solar radiation, is a small part.

The average power levels of ultraviolet light from the sun at the Earth's surface are 2.5 W/m$^2$ for UVA (wavelength from 315 to 400 nanometres (nm) and represents approximately 95% of the ultraviolet radiation reaching the Earth's surface), 0.25 W/m$^2$ for UVB (wavelength from 280 to 315 nm) and 0.001 W/m$^2$ for UVC (wavelength from 100 to 280 nm). The power levels of ultraviolet light from the sun are exceptionally low compared to the power levels of other wavelengths of sunlight. Visible light, for example, has an average power of 100 W/m$^2$, and infrared radiation, which is the main heat source of sunlight, has an average power of 1,000 W/m$^2$. These power levels can vary significantly depending on the time of day, latitude and season.

These power values from the sun's UV light mean that solar photocatalytic processes can be improved in terms of speed or efficiency. Increasing the light intensity with the activation wavelength of the photocatalyst would accelerate the photocatalysis process. Light intensity is the amount of light incident on a given area, so the higher the light intensity, the more photons are absorbed by the photocatalyst. This means that more free electrons and protons are generated, which speeds up the photocatalysis process.

The aim of this invention is to develop holographic systems for optimising the use of solar radiation for photocatalytic processes, which consist of holographic optical elements (HOES) that concentrate the ultraviolet light from the sun and provide the different solar photocatalytic processes with optimum irradiance levels, both in terms of illuminance and the spectral band of sunlight, in order to accelerate the speed of SODIS, solar photocatalysis and solar photo electrocatalysis processes. These holographic systems for optimising the use of solar radiation for photocatalytic processes can be of two types. Holographic systems for optimising the use of solar radiation for photocatalytic processes by transmission, consisting of a hybrid HOE composed of a multilayer structure of holographic mirrors and holographic lenses that concentrate ultraviolet (UV) solar radiation, tuning the spectral band to the needs of the semiconductor or photocatalyst used in each case, or holographic systems for optimising the use of photocatalytic solar radiation by reflection, consisting of a multilayer of holographic mirrors that concentrate solar ultraviolet (UV) radiation with the spectral band adapted to the spectral characteristics of the semiconductor or photocatalyst as appropriate.

These devices will provide the photocatalysis reactor with the optimised solar fuel, directly illuminating the photocatalyst or semiconductor, not only with spectrally tuned solar radiation and preventing other non-useful wavelengths from reaching it so that they do not produce side effects such as heating of the solution, etc., but also high levels of illuminance that accelerate the overall water purification process using SODIS or photocatalysis or photo electrocatalysis processes for water purification, hydrogen production and other processes based on solar chemistry.

*Use of the invention in daylight lighting systems*

According to the International Energy Agency (IEA), energy consumption for lighting worldwide is around 18% of the total. This means that lighting is the second largest energy consumer after heating and cooling. Energy consumption for lighting is increasing and is expected to reach 20% of the total by 2030. The main factor driving the increase in lighting energy consumption is the growth of the world's population. As the world's population grows, so does the demand for lighting energy. Another factor driving the increase in lighting energy consumption is urbanisation. As people move to cities, they need more lighting for their homes and businesses.

Energy consumption for lighting has a significant impact on the environment. The generation of energy for lighting generates greenhouse gases, which contribute to climate change. Lighting energy generation also produces light pollution, which can affect wildlife and human health. Energy efficiency measures for lighting can help reduce energy consumption and the environmental impact of lighting.

Daylighting, which uses direct sunlight for illumination, is a way to improve the energy efficiency of buildings, as reducing electricity consumption contributes to reducing greenhouse gas emissions and improving the sustainability of buildings.

There are different types of daylighting systems, which can be classified into two main groups; indirect daylighting systems, in which sunlight enters the building through translucent elements such as walls, ceilings or facades and is reflected inside the space (by their nature, they do not enter our studio), and direct daylighting systems, in which sunlight enters the building through windows, skylights or skylights, and is directed directly into the space. Windows are the simplest and most economical way to make use of natural light. Skylights are openings in the roof that allow natural light to enter. Skylights are openings in the roof of the building that allow natural light to enter. They come in different shapes and sizes and are available in a variety of materials, such as glass, acrylic or polycarbonate.

Apart from the most common direct daylight lighting systems already discussed, there are other more complex systems based on a solar collector that captures the light and a light distribution system that brings the light indoors.

For light distribution, we can find two modalities, those based on fibre optics or tubular systems for light transmission. Tubular skylights are the more general term used to refer to any lighting system that uses a tube to transmit daylight from the outside to the inside of a building. These systems work in such a way that natural light enters one end of the tube and is transmitted into the building through internal reflections in the tube. The tube can be made of glass, plastic or metal, and can be of different shapes and sizes. Within this modality one can distinguish "light pipes" which is a more specific term used to refer to lighting systems that use a glass or plastic tube to transmit daylight, "light tunnels" which are lighting systems that use a long narrow tube to transmit daylight or "solar tubes" to refer to lighting systems that use a tube to transmit daylight, and which also include a solar collector to concentrate the sunlight. Transmission systems based on optical fibres to transport light can be divided into two types of optical fibres, multimode optical fibre, which has a larger diameter core than single-mode optical fibre, allowing light to propagate in multiple modes (light can travel along different paths through the fibre core) and single-mode optical fibre, which has a smaller diameter core than multimode optical fibre, allowing light to propagate in a single mode (light travels along a single path through the fibre core).

Solar light collectors are devices that collect sunlight and transmit it through a light distribution system to an indoor lighting point. There are two main types of solar light collectors. On the one hand, concentrating solar collectors use a system of lenses or mirrors to concentrate sunlight at one point. The concentrated light is then transmitted through the distribution system to an indoor lighting point. On the other hand, non-concentrating solar collectors use a system of lenses or mirrors to collect the sunlight and distribute it evenly through a transmission system inside and distribute it evenly through a diffuser. It should also be noted that this system uses a combination of holograms and fibre optics.

In this invention we describe a holographic system for optimising the use of solar radiation for natural light lighting systems, which are composed of a multilayer structure of HOES that concentrate a band of the solar spectrum ad-hoc for the type of lighting that is intended to be provided to interior rooms. In general, to provide white light, the HOE would be designed to concentrate, either by transmission or reflection, three spectral bands, red (R, red), green (G, green) and blue (B, blue), the addition of which would generate white light. These holographic systems for optimising the use of solar radiation for lighting systems with natural light would concentrate the desired radiation (spectral band of sunlight) and would be introduced into a wave guide, mainly optical fibre (single-mode or multimode depending on the application) to carry the light to interior rooms, after which, with a diffuser system (holographic or not) the interior rooms would be illuminated.

This invention has several advantages over artificial lighting systems based on electric lamps. Lighting with natural light by means of a holographic system for optimising the use of solar radiation is more efficient because, in the context of the energy transition mentioned in the introduction to the patent, the overall lighting process using a lighting system based on an electric lamp would require several light/electricity, or photon/electron, transformations, which generate losses. If the system were powered by a photovoltaic cell, the first light/electricity (photon/electron) conversion would occur within the photocell itself, a process in which losses would be generated (photocell efficiency of around 17%). The electricity would then be distributed along a voltage line, which in turn would have losses (the longer the cable, the greater the losses). On reaching the lamp, the electricity/light (electron/photon) exchange would take place again, which would generate additional losses. However, the proposed invention reduces the losses produced by the transport and the electricity/light conversion, as direct sunlight would be used, concentrated and introduced into a waveguide at the destination, which would be diffused directly without going through any transformation process that could cause efficiency losses. In the same way, this lighting system, as there is no light/electricity conversion at any stage of the process, are perfect systems for lighting areas where there is a danger of explosion due to the presence of combustible gases, such as mines, water treatment plants, fuel tanks, refineries, etc., as, as they do not produce electrons, there is no risk of deflagration.

Likewise, this lighting system, which uses a holographic system to optimise the use of solar radiation, offers a series of advantages over artificial light, which can be divided into three main categories:

Physical advantages:

- Greater energy efficiency: Natural light is a free and renewable source of light. It does not require the use of energy to generate it, which makes it more efficient than artificial light.
- Better quality of light: Natural light has a full spectrum of colours, which provides more natural and pleasant lighting. Artificial light, on the other hand, tends to have a more limited spectrum, which can result in less natural and more tired lighting.
- Better light control: With an ad-hoc design of the HOE, light levels can be controlled. This allows the amount of natural light entering a room to be adapted to specific needs. Artificial light, on the other hand, is often more difficult to control, which can result in lighting that is too bright or too dim.

Cost advantages:

- Lower installation costs: The installation of natural light is usually cheaper than the installation of artificial light.
- Lower maintenance costs: Daylight does not require regular maintenance. Artificial light, on the other hand, requires replacement of bulbs and maintenance of lighting equipment.

Biological advantages:

- Better health and well-being: Exposure to natural light has been linked to a number of health benefits, such as reduced stress, increased energy and improved mood.
- Increased productivity: Exposure to natural light has been linked to increased productivity.
- Better sleep: Exposure to natural light in the morning can help regulate the circadian cycle, which can lead to better sleep at night.

In summary, daylighting offers a number of advantages over artificial light, both in physical, cost and biological terms. It is a more efficient, more natural and healthier option than artificial light. Here are some specific examples of how natural light can improve quality of life; in hospitals, natural light has been shown to reduce stress and anxiety in patients, in schools, natural light has been shown to improve students' academic performance or in workplaces, natural light has been shown to increase employee productivity.

In turn, lighting systems using a holographic system for optimising the use of solar radiation have an advantage over lighting systems using natural light by means of collector elements with conventional optics, namely spectral selectivity. Daylight has a full spectrum of colours, containing a variety of wavelengths. Each wavelength of light has a different effect on our body. For example, blue light can help regulate our circadian cycle, while red light can help promote relaxation. If we control the spectrum of light using holographic optics, we could create lighting that is more beneficial to humans. Some spectral configurations that could be beneficial would include lighting that is rich in blue light in the morning and evening to help regulate the circadian cycle, lighting that is rich in red light in the evening to help promote relaxation, or lighting that is rich in green light to help improve mood.

It has been shown how light is a powerful stimulus that can affect our health and well-being in many ways. By controlling the spectrum of light, we can create lighting that is more beneficial to us as there are some specific examples of how the quality of the light spectrum can influence our well-being. Exposure to blue light in the morning can help wake us up and improve our mood. Exposure to red light in the evening can help us relax and fall asleep. Exposure to green light can help reduce stress and anxiety.

As previously mentioned in the holographic system for optimising the use of solar radiation for horticulture and agriculture, the holographic system for optimising the use of solar radiation for lighting systems with natural light can be installed in either fixed or static structures, which have the same system for optimising the use of solar radiation or can be in dynamic systems and be interchangeable by means of remote-controlled supports or roll-up rolls with different configurations, which can be deployed or collected according to the solar spectrum that is desired to provide.

In addition, there are other potential advantages to using a holographic optical element (HOE) as a solar concentrator. One advantage is their spectral selectivity as HOES can be designed to concentrate a specific band of the solar spectrum, which can reduce the amount of light transmitted through the optical fibre, which can reduce attenuation. Another advantage is that HOES can be more efficient than concentrators based on conventional optics, as they can concentrate light into a smaller area, which reduces the amount of light lost to scattering. Finally, HOES can be more compact than concentrators based on conventional optics. This can reduce the cost and complexity of the solar fibre optic lighting system.

*Use of the invention for energy transmission and distribution*

A variant of the holographic solar radiation harvesting optimisation system for daylight lighting systems is a holographic solar radiation harvesting optimisation system for energy transmission and distribution, which is a hybrid that links holographic solar radiation harvesting optimisation systems for photovoltaic systems with holographic solar radiation harvesting optimisation systems for daylight lighting systems. In this case, the HOES would be optically designed to concentrate the sunlight tuned to the spectral band needed by the photovoltaic panels to generate energy and introduce it into a wave guide for its transport inside the installations.

Current generation systems (centralised in large production parks located far from cities) entail energy losses during transport, which is why, in order to increase the efficiency of the energy generation system and avoid transport losses, the European Union advocates a distributed energy generation system interconnected through the energy grid, with the aim of generating energy directly in the place where it is going to be consumed and at the same time being able to exchange energy between the different nodes.

By means of a holographic system for optimising the use of solar radiation for energy transmission and distribution that directly transports sunlight, spectrally selected and tuned to the operating band of the photovoltaic cells, a photovoltaic installation could be installed indoors (false ceilings or garages, for example) and powered by a light distribution system based on waveguides (optical fibres).

With this configuration, the photovoltaic cells would be protected from inclement weather, dust and/or dirt, avoiding losses due to their installation outdoors (as mentioned above). In addition to this, we would solve the limitation of the lack of space on the roofs, being able to place a greater number of photovoltaic cells and thus be able to cover the energy demands of the building and send a greater amount of useful radiation, increasing the photovoltaic performance, thus being able to increase the energy production of the building and get a little closer to the European objective in the building sector to obtain almost zero energy consumption buildings (NZEB).

Throughout the description and the claims, the word "comprises", and its variants are not intended to exclude other technical features, additives, components or steps. To those skilled in the art, other objects, advantages and features of the invention will be apparent in part from the description and in part from the practice of the invention. The following examples and drawings are provided by way of illustration and are not intended to restrict the present invention. Furthermore, the present invention covers all possible combinations of particular and preferred embodiments indicated herein.

FIG.1      - Shows a transmittance graph of an RHOE.

FIG.2      - Shows a schematic of a hexagonal tessellation (A); triangular hexagonal semi-regular (B); circular semi-regular (C); superimposition of two hexagonal tessellations of the same size (D); superimposition of two hexagonal tessellations of varied sizes (E); and superimposition of seven hexagonal tessellations of the same size (F).

FIG.3      - Shows a schematic of an example of an operation of the invention in horticulture and agriculture, focused on a small area (A); or on a large area (B).

FIG.4      - Shows a schematic of an example of operation of the invention in agro-holophotovoltaic configuration, where in the images (A)-(D) different practical examples are shown.

FIG.5      - Shows a schematic of an example of how the invention works in dynamic climate control, in winter (A) and in summer (B).

FIG.6      - Shows a schematic of an example of operation of the invention in outdoor radiation broadcasting.

FIG.7      - Shows a schematic of an example of operation of the invention in indoor radiation broadcasting.

FIG.8      - Shows a schematic of an example of how the invention works in environmental integration.

FIG.9      - Shows a schematic of an example of the operation of the invention in photovoltaic power generation when irradiance is excessive (A), or not (B).

FIG.10     - Shows a schematic of an example of an operation of the invention in photocatalytic systems, by reflection with concentrated focus (A), by reflection with extended focus (B), and by transmission with concentrated focus (C), or extended focus (D).

FIG.11     - Shows a schematic of an example of how the invention works in a daylight illumination system, operating by reflection (A), by transmission (B) or as a photovoltaic energy transmission system (C).

The invention is based on implementing holographic system patterns of the invention based on holographic optical elements (*HOES, HOLOGRAPHIC OPTICAL ELEMENTS*) as base structures. HOES are optical elements that base their operation on the physical property of diffraction, in contrast to conventional optics that base their operation on the physical properties of reflection and refraction.

Hence, from now on we will always refer to the diffracted beam or diffraction for HOES and not as reflected beam or reflection, as they are completely different concepts and ways of operating.

HOES are nanostructures that are generated by storing in a recording material the constructive interference pattern of light beams generated by stimulated emission. This pattern generates Bragg structures which, depending on their configuration, give them different optical characteristics. Furthermore, depending on the spacing of the Bragg structures, each wavelength will diffract at a different angle.

HOEs can be classified into transmission HOEs (THOEs) and reflection HOEs (RHOEs). In THOEs, light is incident on one side of the structure and diffracted on the opposite side, as in diffraction gratings and holographic lenses. The main characteristic of transmission HOEs (THOE) is that they have chromatic aberration and can separate the spectral components in different directions of propagation. In RHOE, incidence and diffraction occur on the same side of the optical structure, as in holographic mirrors. The main characteristic of reflection HOEs (RHOE) is their spectral selectivity, reflecting certain wavelengths by diffraction and not acting on the rest.

HOEs, being diffractive elements, have different properties from conventional optical elements. They are thin structures, from 6 $\mu$m to more than 100 $\mu$m. Therefore, they are light and allow control of the directionality of the light, being able to handle different wavelengths simultaneously and independently. In addition, they can be flat surfaces and complex hybrid HOES with distinctive characteristics can be designed in the same optical element. Depending on the spacing distribution of the Bragg structure forming the HOE, one wavelength or another will be diffracted in one direction or another.

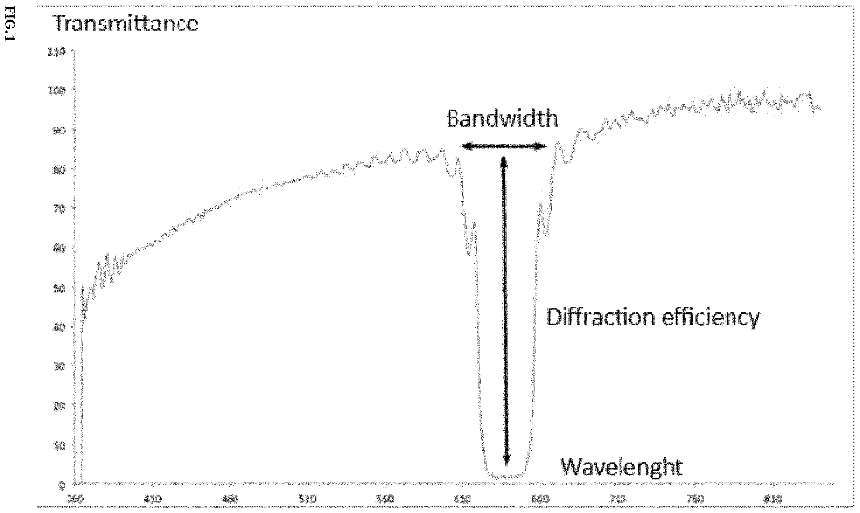

An example of the characteristic graph of transmittance as a function of the diffracted wavelength of an RHOE can be seen in **FIG.1.** This figure shows an example of the design parameters that can be chosen when implementing an RHOE. These parameters are the wavelength ($\lambda$) or, in other words, the colour to be diffracted, the bandwidth ($\Delta\lambda$), the amount of that colour to be diffracted, and the diffraction efficiency ($\eta$), that is, the percentage to be diffracted with respect to the incident light. These parameters will give the RHOE its optical characteristics.

The present invention employs transmission HOE (THOE), which include diffraction gratings and holographic lenses, reflection HOE (RHOE) and a combination thereof, also called hybrid HOE. HOEs may be recorded on any holographic recording material, such as photorefractive materials, which may include dichromated gelatines, photopolymers, photoresists, silver halides or *SILVER HALIDE SENTITIZED GELATIN* (SHSG). The thickness of each HOE may vary from 6 $\mu$m to 300 $\mu$m.

The HOE can be directly bonded to the structure, sealed on a glass or polymer support, or bonded to a textile, composite, glass fibre, carbon fibre, metal, or resin support, depending on the structure, application or process in which the invention is to be implemented, in accordance with the various uses explained in this specification. Each HOE can be configured according to the needs required for its operation. The configurable properties in each HOE are as follows:

The wavelength ($\lambda$) of the electromagnetic spectrum to be diffracted. In reflection holograms, we can select the wavelength to be diffracted in the design, that is, we can choose the colour to be diffracted by the HOE. This spectral selection can be single, each HOE diffracts one wavelength, or multiple, an HOE can diffract several wavelengths at the same time. The part of the electromagnetic spectrum to be covered may be the ultraviolet (UV), the visible spectrum and the infrared (IR) spectrum. If the reflecting HOE is tuned to diffract at a specific wavelength (e.g. the RGB ($\lambda_R$, $\lambda_B$, $\lambda_G$)), it will be transparent to the rest, a concept that will later be used for multilayer designs.

If the HOE is a transmission holographic element, the element can be designed to have a specific spatial frequency density. This allows us to vary the diffraction efficiency and the angle of diffracted orders as appropriate.

It is possible to select the diffraction efficiency ($\eta$) of each RHOE. Therefore, the percentage of reflectivity in the RHOE can be selected. This feature allows us to design RHOEs that can diffract a high percentage of the wavelength of the light they receive or decrease this "reflectance", being able to tune each HOE to the level of reflectivity desired for the specific application.

The bandwidth ($\Delta\lambda$) of the band can be selected, opting for HOE with a wider or narrower bandwidth. This property of spectral selectivity will influence the number of layers in the structure, as well as the treatment of each wavelength or group of wavelengths independently from the rest.

The present invention allows control of diffraction direction ($\alpha$). In HOEs, by using diffraction instead of reflection as the physical law, an HOE can be designed to diffract the selected wavelength in the desired directions (angles, a), not being subject to the angular restrictions that Snell's law sets for the reflection of conventional optical elements. This property allows the diffraction direction of the element to be chosen and adjusted to the specific needs of each application.

An HOE can be designed with or without optical magnification factors (**M**), similar to concave and convex mirrors or converging and diverging lenses in conventional optics. If the hologram does not have magnification factors, it will diffract the solar radiation in a collimated form, respecting the shape of the wavefront and therefore the irradiance level. On the other hand, if we provide the HOE with magnification factors, the shape of the wavefront of the light will be distorted, being able to concentrate the radiation or expand it to create systems of concentration or diffusion of radiation or sunlight. This property can be designed according to the optical effect to be obtained.

The invention is based on the development of lattice structures based on a basic optical element, a HOE, which we will call HOXEL (*HOLOGRAPHIC PIXEL*). Each HOXEL can be configured according to the aforementioned properties, being able to select its diffraction wavelength, spatial frequency density, diffraction direction, diffraction efficiency, bandwidth, whether it has magnification or not, whether it is a single HOE or a multiplexed HOE, among others, according to the optical effect that is to be produced in it or the functionality that is intended to be obtained from the overall structure.

*Structure of a HOXEL*

Each HOXEL is composed of one or more HOE, forming a multilayer structure, which can have up to 35 layers. These layers are divided into two types: (a) additional optical elements and (b) RHOE multilayers, which are grouped in a structure to be called diffractive reflection block (DRB).

Each BRD is composed of one or more layers of RHOES, which will be selected according to the desired optical effect of the final structure. The objective of the BRD is to provide each HOXEL with the necessary optical properties. In this section, only the possible combination of chromaticities of each of the layers is specified, and each layer can individually have any other design possibility within the properties of a HOE mentioned above (spatial frequency density, diffraction direction, diffraction efficiency, bandwidth, whether it has magnification or not, whether it is a single HOE or a multiplexed HOE, etc.). The simplest structure of a BRD would be a single layer consisting of a multiplexed RHOE for three wavelengths diffracting blue (B), green (G) and red (R), forming an RGB optical element diffracting white light to diffract the environment in colour as we perceive it through the human eye.

The BRD can be formed by a multilayer structure of three HOE, each of which will diffract a different wavelength, R, G, B, achieving a higher efficiency in each layer and obtaining as a whole the diffraction of white light that adapts to the required chromaticity. Another configuration of the BRD would consist of a multilayer structure formed by four HOEs, each of which will diffract a different wavelength, R, G, B and infrared (IR), thus achieving not only the appropriate chromaticity, but also the diffraction of part of the infrared spectrum to make the BRD effective in low-light environments. Finally, the BRD block could be composed of a multilayer structure with a number of layers varying between one and 35 layers, which will be composed of several HOE of a combination of the properties mentioned above, in order to provide the BRD block with a complex optical multifunctionality resulting from the superposition of layers, including the diffraction of the entire visible spectrum, as well as the ultraviolet (UV) and infrared (IR).

Each HOXEL may be composed of a BRD or a BRD and a multilayer structure of optical elements, which may be diffraction gratings or holographic lenses. A multilayer structure of a HOXEL would be composed of a BRD with specific characteristics and one or more layers composed of diffraction gratings or holographic lenses (one- or two-dimensional) that will add specific transmission parameters to the BRD layer by the consequent diffraction in different directions of the different diffraction orders and wavelengths present in the light under which the device operates.

The overall functionality of each HOXEL, depending on the specific configuration of each of its parts, may be, on the one hand, to diffract light, normally natural light, in directions that conventional optics would not allow, without changing the properties of the incident beam. In other words, neither convergence nor divergence is added to the diffracted beam, while keeping the collimation of incident natural light. In short, redirecting the light beam by reflective diffraction.

A second functionality would be to be able to function as holographic concentrators or scatterers, as a result of the BRD block of magnifications in one or more of its RHOES layers. If this configuration of each HOXEL were to be introduced into a meshed structure generated by optical pixelation, this would in turn produce a mesh of concentrated beam focuses when the system works as a whole, in short, the capacity to concentrate light in one or several geometric structures by reflective diffraction.

A third functionality is the annexation of holographic lens layers or diffraction gratings, which would add to the BRD functionalities a chromatic dispersion that would in turn produce a chromatic pixelation in a lattice of HOXEL. The difference between configurations will only affect how it is performed, whether all wavelengths in the same direction or in independent directions, as well as the parallelism of its beams, by means of an element with or without magnification that maintains collimation or, on the contrary, converges or diverges the direction of each monochromatic light beam. This functionality will make it possible, by means of transitive diffraction, to redirect the light beams towards specific directions, as well as to allow their collimated passage or their concentration in foci of configurable geometry.

By working with all the layers together, it would be possible to selectively control the spectrum of sunlight passing through the holographic optical element, being able to control both the geometry of the light beams, their concentration or collimation properties, as well as the geometry, spectral band and wavefront shape (concentrating or collimating the light) of the reflected beams, making it possible to create optical blocks that can modulate ad-hoc the characteristics of the solar radiation received by the holographic system of the invention.

*Base form of each HOXEL*

Each HOXEL can have two basic shapes. For simplicity, due to the way HOEs are implemented, the basic HOXEL can be circular in shape for specific cases. However, the preferred shape of each HOXEL is hexagonal, with optional square or rectangular structures.

The hexagonal shape was chosen for several reasons. On the one hand, with regard to manufacturing, the construction of an HOE is carried out by means of a laser beam, which has a Gaussian shape. The hexagon represents the regular geometric figure with the largest area that fits the cross-section of the beam (circular in shape), giving the HOE greater uniformity over its entire surface. On the other hand, with respect to the multiple configuration, the regular hexagon can cover a surface by means of a simple tessellation, without the need to resort to other geometric shapes for filling, so that a perfect mesh of hexagons can be implemented to provide the structure with a digital pattern that pixelates the optical effect. These two faculties are basic to simplify the manufacture of a HOXEL mesh.

Likewise, the hexagon represents the most efficient shape in nature, as it encloses the largest area for a given perimeter, thus minimising the border between each of the HOXELs and, consequently, minimising the border effect between the HOXEL and the adjacent one, which could cause optical distortions. On the other hand, the hexagon, being a regular figure, will allow HOXEL layers to be superimposed symmetrically, as we will see in the next section, since a hexagonal figure can be built from a grouping of smaller hexagons. This will make it possible to design micro and macro patterns, which give additivity to the properties of the different layers, making it possible to design hybrid structures with complex optical effects resulting from the superimposition of the properties of each individual layer. The sizes of basic HOXELs can range from 1 mm$^2$ to 300,000 mm$^2$, which, under a fractal configuration, could be the basis for larger composite HOXELs.

*Multi-HOXEL structures*

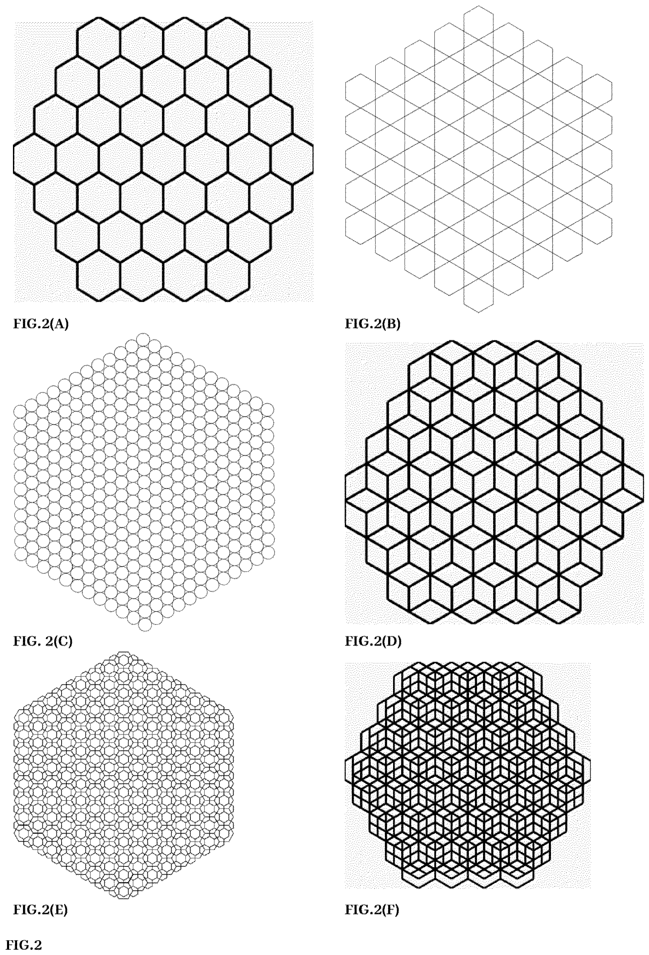

HOXELs can be grouped in diverse ways as appropriate to achieve the desired effect. These groupings can be divided into two main classes, a simple mesh and a composite or multilayer mesh. Within simple meshes, HOXELs can be grouped according to different (non-limiting) tessellations as shown in FIG.2.

The regular tessellation is the basis for the arrangement of each HOXEL due to its capacity to cover any surface, providing the whole structure with the optical effects designed. The arrangement of the HOXELs by means of the semi-regular hexagonal triangular tessellation will provide the structure with the possibility of designing a real fractal that gives it an invariance of scale. This arrangement leaves triangular gaps that can be filled with other triangular HOXELs or remain unfilled, with the structure presenting triangles of the base colour of the structure. The simple grid structure of circular HOXELs shall be arranged in a semi-regular tessellation. This arrangement has the same purpose as the semi-regular hexagonal tessellation, which is a general fractal pattern.

Composite or multilayer gratings are based on the concept of superposition of optical effects. HOEs are designed to diffract a specific wavelength with a corresponding bandwidth, and layers can be made to diffract different wavelengths, therefore, as each layer is opaque at its designed wavelength, but transparent to all other wavelengths, the optical effects of each layer can be superimposed.

Within the composite meshes we have a superposition of two hexagonal tessellations of the same size, a superposition of two or more hexagonal tessellations of varied sizes and a superposition of seven hexagonal tessellations of the same size. These multilayer tessellation structures aim to realise complex holographic camouflage patterns by superimposing effects according to the properties of each HOXEL layer. In multilayer tessellations of varied sizes, the size ratio of the HOXELs in each layer is 1/3, i.e. as layers are added, the individual HOXELs will have three times the area of the layer immediately below.

*Configuration of multi-HOXEL structures*

In the previous section, we discussed the properties of each HOE, as well as the different configurable characteristics of each HOE individually. In this section, based on these individual properties of each HOE, we will describe the different configurations that a grouping of HOXELs in a mesh can present. Within each mesh, the HOXELs can be grouped in different configurations according to the properties mentioned above. These mesh configurations, as with the HOE properties discussed in the previous section, because they are independent optical configurations, can be implemented individually or together in multiple configurations, superimposing the effects of each of them.

The HOXELs can all have the same diffraction direction (a), all diffracting at the same angle and thus creating an overall visual effect of a pseudoscopic image of the environment at a scale of 1:1. In turn, the lattice of HOXELs can have different diffraction directions (a), with each HOXEL diffracting at a different angle to adjacent or nearby HOXELs.

In the same way, HOXELs can be configured within a grid with and without optical magnification (M). The configuration without optical magnification provides a diffraction that preserves the shape of the diffracted beam, normally a collimated beam if it is a natural light source such as the Sun, this fact provides a diffraction that preserves the scale proportions of the diffracted images, so that each diffraction per HOXEL unit maintains the 1:1 dimension.

The HOXEL mesh can be designed as a mosaic of chromatic elements. Until now, in all configurations, each HOXEL had the same RGB chromaticity that allowed the diffraction of a full-colour image of the environment. In turn, it is possible to design a mesh with a chromatic configuration of HOXELs that is independent and different from the adjacent HOXELs, generating an RGB mosaic analogous to the pixelation of a monitor. This configuration will consist of implementing each HOXEL with a different diffraction wavelength ($\lambda$) to the adjacent HOXELs. In this configuration, in order not to lose effectiveness, the proportionality of the RGB chromaticity must be maintained and each hexagonal vertex must be the intersection of three different wavelengths, one for red chromaticity (R), one for green chromaticity (G) and one for blue chromaticity (B).

On the other hand, until now all HOXEL configurations had the same diffraction efficiency ($\eta$), i.e. they diffracted the same percentage of incident light. It is possible to implement a configuration that has variable diffraction efficiency, i.e. each HOXEL has a different diffraction efficiency than adjacent HOXELs.

All these configurations, in turn, can be grouped to generate complex holographic systems, according to the required use or application. Once the distinctive design options of each HOXEL have been described, as well as their possible grouping and arrangement according to their properties in a mesh, the functionality of each holographic system in accordance with the present invention is described.

*Use for horticulture and agriculture.*

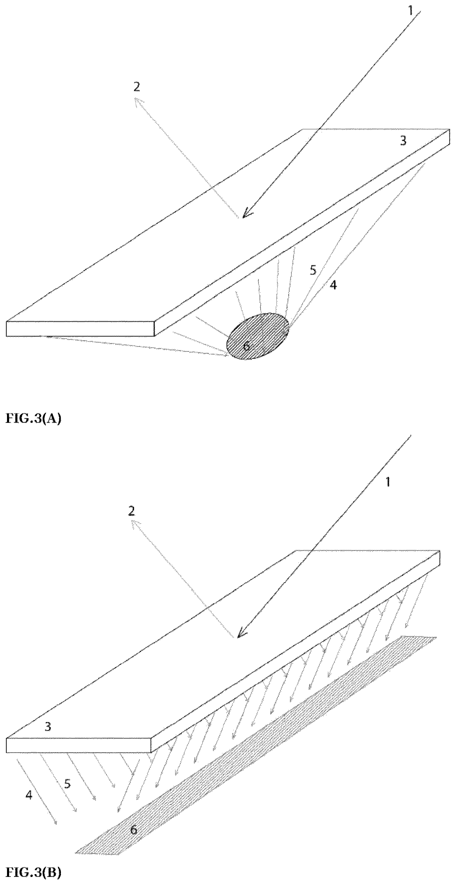

The holographic system of the invention for horticulture and agriculture will be formed by a multilayer tessellation of holographic optical elements, which, in a first layer will consist of a tessellation of HOXEL being all of them generated by reflection and tuned to reflect the spectral wavelengths that are not desired to send the plant and whose functionality will be to avoid that the unwanted wavelengths are provided to the crops. A second layer will be formed by a tessellation of HOXEL by transmission, with or without optical enhancements in its design. Its functionality is to redirect and concentrate or not the optimised light, both in direction, spectrum and intensity that is going to be provided to the crops, being able to concentrate the light, if it were the case in reduced geometric zones to illuminate individually each plant or an extensive focalisation, being able to illuminate jointly a group of plants. In a joint way, its operation would be as shown in **FIG.3**.

**FIG.3(A)** shows an example of the operation of a holographic system of the invention for horticulture and agriculture focusing on a small area. Reference 1 indicates the beam of solar radiation (white light). Reference 2 indicates the diffracted beam by reflection which is composed of the unwanted spectral part to provide the crop. Reference 3 is the holographic system of the invention composed of HOES. Reference 4 is the transmission diffracted beam and specific spectral band, e.g. blue. Reference 5 is the transmission diffracted beam and specific spectral band (different from the previous one), e.g. red. Finally, reference 6 is the narrow-area focusing of both spectrally selected beams.

**FIG.3(B)** shows an example of operation of a holographic system of the invention for horticulture and agriculture focusing on a large area. Reference 1 indicates the beam of solar radiation (white light). Reference 2 indicates the diffracted beam by reflection which is composed of the unwanted spectral part to provide the crop. Reference 3 is the holographic system of the invention composed of HOES. Reference 4 is the transmission diffracted beam and specific spectral band, e.g. blue. Reference 5 is the transmission diffracted beam and specific spectral band (different from the previous one), e.g. red. Finally, reference 6 is the wide area focusing of both spectrally selected beams.

These systems can be installed in fixed or static structures, which present the same system of the invention or can be in dynamic systems and be interchangeable by remote electronic control, or roll-up rolls with different configurations, which can be deployed or collected according to the solar spectrum to be provided to the crops according to their stage of photomorphogenesis depending on the state of the plant or the time of the year.

*System of the invention for horticulture and agriculture in agro-hydro-photovoltaic configuration*

The holographic system of the invention for horticulture and agriculture in agro-photovoltaic configuration is similar to the previous one with the difference that this system of the invention will be placed between photovoltaic panels and therefore, the direction of diffraction must be such as to provide illumination to the crops under the panels that would otherwise be in the shadow of the photovoltaic panels.

This system of the invention will be formed by a multilayer tessellation of holographic optical elements, which, in a first layer will consist of a tessellation of HOXEL being all of them generated by reflection and tuned to reflect the spectral wavelengths that are not desired to send the plant and whose functionality will be to avoid that the unwanted wavelengths are not provided to the crops. A second layer will be formed by a tessellation of HOXEL by transmission, with or without optical enhancements in its design. Its function is to redirect and concentrate or not the optimised light, both in direction, spectrum and intensity that is going to be provided to the crops, being able to concentrate the light (if it is the case) in reduced geometric areas to illuminate each plant individually or an extensive focalisation, being able to illuminate a group of plants together.

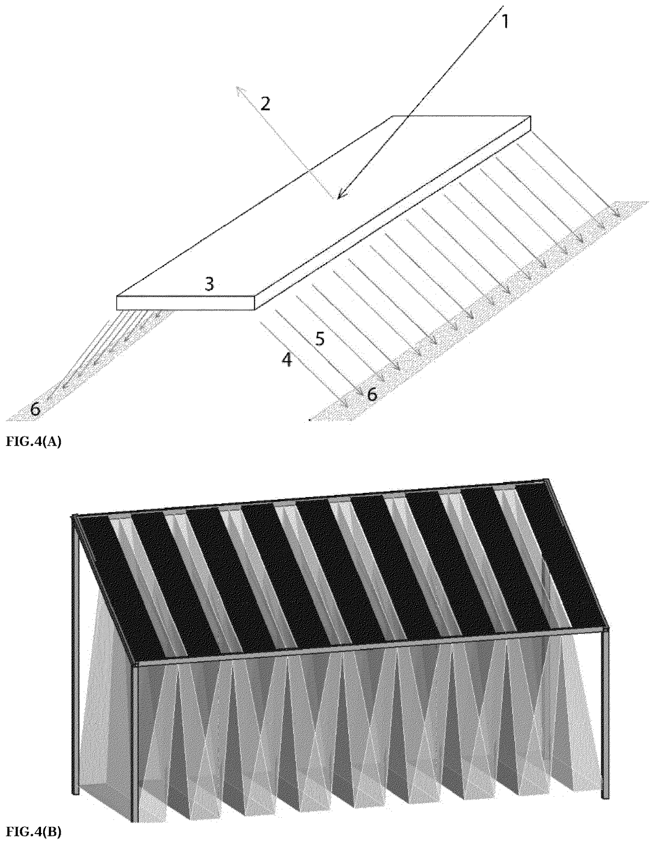

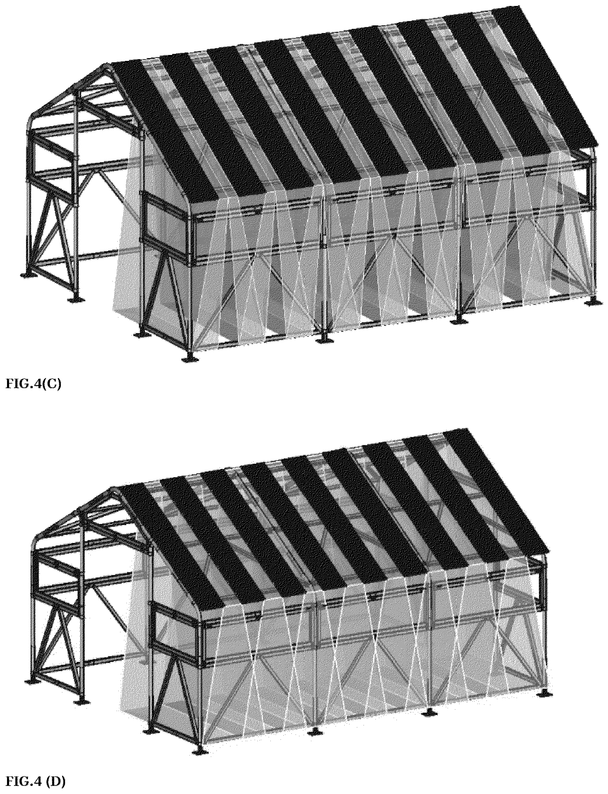

These systems will be sandwiched between photovoltaic panels on an elevated structure in order to combine photovoltaic generation on the elevated structure and agricultural production at ground level, which is illuminated by natural and spectrally selected light to optimise agricultural growth, as shown in **FIG.4.**

*Holographic system of the invention for singular buildings*

*a) Holographic dynamic climate control system of the invention*

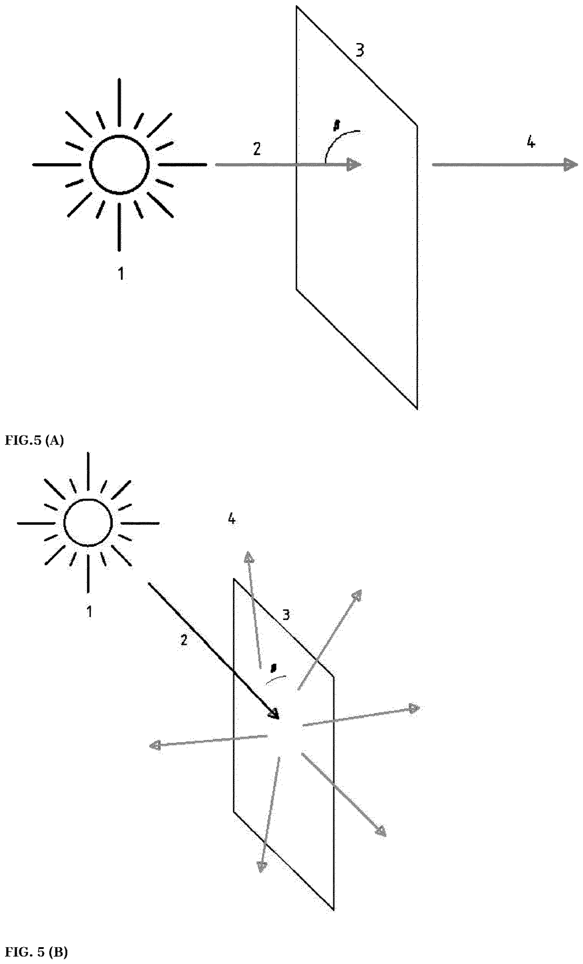

The holographic system of the invention for dynamic air conditioning will consist of a multilayer tessellation of holographic optical elements, which will consist of a tessellation of HOXELs, all of which are generated by reflection and tuned to reflect the spectral wavelengths that are not desired to penetrate the installation. These HOXELs may be designed to have variable efficiency, being able to diffract by reflection all or a percentage of a part of the spectrum of the incident solar radiation, as required by the geometry of the building, its geographical location or its orientation. Thus, for example, within the same building, the HOXELs of the south-facing windows will not have the same reflectance as those of the north-facing windows, allowing more radiation to enter than others and thus achieving thermal uniformity throughout the building. Similarly, the HOXELs of the structure will be designed in such a way (according to the needs of the building) that the hologram acts for certain geometries, which will coincide with the angle of incidence of sunlight in summer periods in the central hours of the day, and does not act for other geometries, being able to block all or part of the radiation in summer and allowing it to enter in winter, when it is necessary for its thermal contribution. Its operation would be as shown in **FIG.5.**

**FIG.5(A)** shows an example of the operation of a holographic system of the invention for dynamic climate control in winter. 1 indicates the Sun, 2 is the beam of solar radiation (white light), 3 is the holographic system of the invention composed of HOES, 4 is the undiffracted beam due to the angle of incidence. In **FIG.5(B),** the example of operation of a holographic system of the invention for dynamic air-conditioning in summer is shown. 1 indicates the Sun, 2 is the beam of solar radiation (white light), 3 is the holographic system of the invention composed of HOES, 4 is the diffracted beam by reflection (in all directions) due to the angle of incidence.

This system of the invention aims to use the influence of solar radiation for air conditioning in an optimised, dynamic way and with a static structure, resulting in considerable savings in air conditioning systems, both in winter and summer, which harmonises the comfort temperature necessary for habitability.

*b) Holographic radiation rediffusion system of the invention*

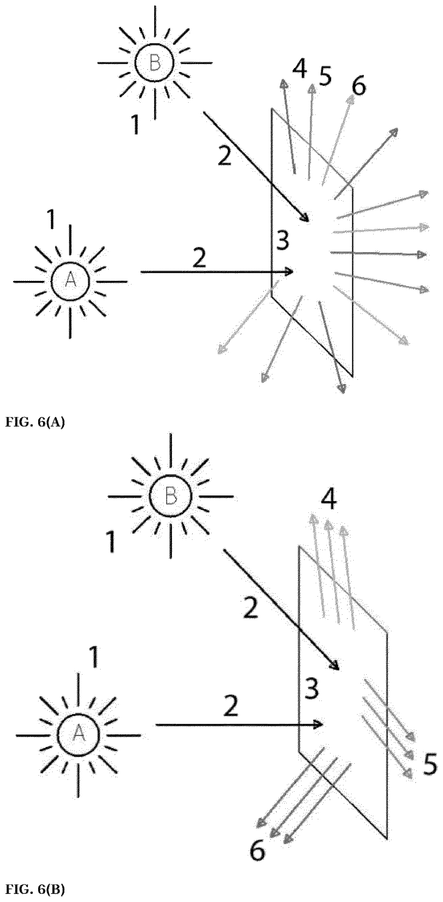

The holographic radiation rediffusion system of the invention will consist of a multilayer tessellation of holographic optical elements, which will consist of a tessellation of HOXELs, all of which are generated by reflection and tuned to reflect the desired spectral wavelengths according to specific geometries of incidence of sunlight on the building. These HOXELs may be designed to have variable efficiency, being able to diffract by reflection all or a percentage of a part of the spectrum of the incident solar radiation, as required by the geometry of the building, its geographical location or its orientation. Their operation would be as shown in **FIG.6.**

**FIG.6(A)** shows the operating example of a holographic radiation rediffusion system of the invention. 1 indicates the Sun in different positions, 2 is the beam of solar radiation (white light), 3 is the holographic system of the invention composed of HOES, 4 is the diffracted beam by reflection (in all directions) due to the angle of incidence of a specific spectral band, 5 is the diffracted beam by reflection (in all directions) due to the angle of incidence of another specific spectral band, 6 is the diffracted beam by reflection (in all directions) due to the angle of incidence of another specific spectral band.

This system of the invention is intended to diffract the solar radiation in a dispersive manner so that the possible geometric configurations of the building do not pose any safety problems for the surrounding infrastructure and people, thus preventing the light from concentrating massively due to the size of the building and causing material or health damage in the area. In this example the scattered radiation is scattered randomly in all directions and all spectral components.

**FIG.6(B)** shows the operating example of a holographic radiation rediffusion system of the invention. 1 indicates the Sun in different positions, 2 is the beam of solar radiation (white light), 3 is the holographic system of the invention composed of HOES, 4 is the beam diffracted by reflection (in all directions) due to the angle of incidence of a specific spectral band, 5 is the beam diffracted by reflection (in all directions) due to the angle of incidence of another specific spectral band, 6 is the beam diffracted by reflection (in all directions) due to the angle of incidence of another specific spectral band.

The aim of this system of the invention is to diffract the solar radiation in a dispersive manner so that the possible geometric configurations of the building do not pose any safety problems for the surrounding infrastructure and people, thus preventing the light from concentrating massively due to the size of the building and causing material or health damage in the area. In this example, the scattered radiation is dispersed in an orderly manner according to each spectral band in specific geometries so that it can be used for other application.

*c) Holographic inner radiation rediffusion system of the invention*

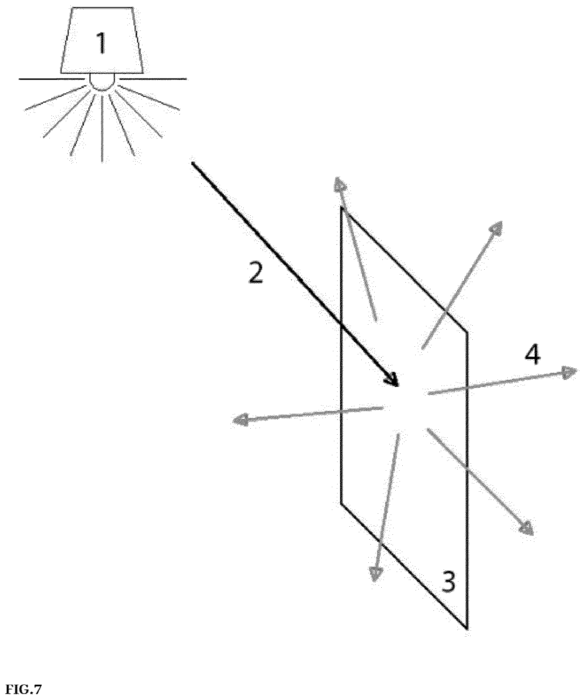

The holographic indoor radiation rediffusion system of the invention will consist of a multilayer tessellation of holographic optical elements, which will consist of a tessellation of HOXELs, all of which are generated by reflection and tuned to reflect the spectral wavelengths that are tuned to the Lifi emitters of the installation, either in the visible or infrared spectrum. Their operation would be as shown in **FIG.7.**

**FIG.7** shows an example of the operation of a holographic indoor radiation rediffusion system of the invention. 1 indicates the Lifi emitter, either an infrared (IR) emitter or a visible light lamp, 2 is the Lifi wave beam, 3 is the holographic system of the invention consisting of HOES, 4 is the beam diffracted by reflection (in all directions) of a wavelength spectral band of the Lifi emitter. This system of the invention is intended to diffract the Lifi communication waves by reflection in all directions in order to provide Lifi coverage to the entire installation while at the same time creating a closed enclosure for the Lifi waves, preventing them from escaping to the outside through the transparent windows, thus providing security in wireless telecommunications through Lifi in the installations.

*d) Holographic system of environmental integration invention*

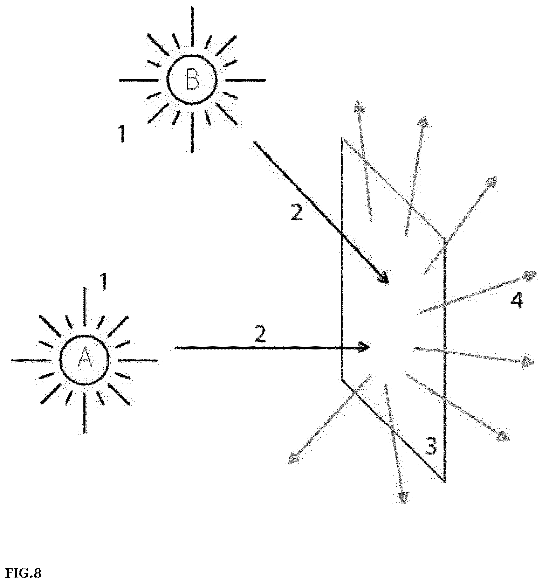

The holographic environmental integration system of the invention will consist of a multilayer tessellation of holographic optical elements, which will consist of a tessellation of HOXELs, all of which are generated by reflection and tuned to reflect ultraviolet (UV) wavelengths. Its operation would be as shown in **FIG.8.**

**FIG.8** shows an example of the operation of a holographic system of the invention for environmental integration. 1 shows the Sun in different positions, 2 is the beam of solar radiation (white light), 3 is the holographic system of the invention composed of HOES, 4 is the diffracted beam by reflection (in all directions) of the spectral band corresponding to the ultraviolet (UV). This system of the invention is intended to reflectively diffract the ultraviolet (UV) spectral part of the solar radiation in a dispersive way so that birds can be aware of the presence of the glass and do not collide with it. Diffracting from the UV spectral band will make such reflections visible to the birds while invisible to the human eye. This HOE can be either a holographic mirror in UV or holograms of an object in ultraviolet, in which case it can be geometric markings or 3D shapes on the glass that make the structure visible to the birds.

*Holographic system of the invention for photovoltaic energy*

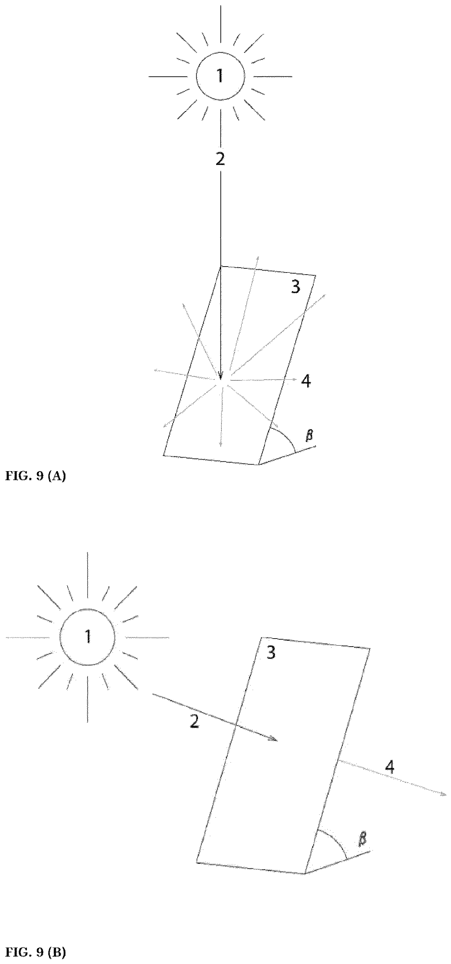

The holographic system of the invention for photovoltaic energy will be formed by a multilayer tessellation of holographic optical elements, all of them generated by reflection and tuned to reflect the spectral wavelengths that are not desired to be incident on the photovoltaic panel. These HOXELs may be designed to have a variable efficiency, being able to diffract by reflection all or a percentage of a part of the spectrum of the incident solar radiation, as required by geographical location or the orientation of the photovoltaic panel. Similarly, the HOXELs of the structure will be designed in such a way (according to the needs of the installation) that the hologram acts for certain geometries, which will coincide with the angle of incidence of sunlight in summer periods in the central hours of the day and does not act for other geometries, It can reflect all or part of the radiation in summer, when the photovoltaic panels have losses due to thermal effects from receiving too much solar irradiance, and allow all the solar radiation to fall on the panel in winter, when all its irradiance is needed to generate electricity. Its operation would be as shown in **FIG.9.**

In **FIG.9(A),** the example of operation of a holographic system of the invention for photovoltaic energy in summer is shown. 1 indicates the Sun, 2 is the beam of solar radiation (white light), 3 is the holographic system of the invention composed of HOES, 4 is the diffracted beam by reflection (in all directions) due to the angle of incidence. By means of this system of the invention, it is intended that the photovoltaic panel does not suffer losses due to thermal effects due to overheating caused by an excess of solar irradiance that raises its temperature excessively in summer periods. To this end, the system is designed to optimise the use of solar radiation with the appropriate design depending on the geographical location where the photovoltaic panel is to be installed, its orientation, geometry, inclination, and the material of which it is made, among others.

This configuration will cause a lower or higher percentage (depending on the latitude and geographical location where the panel is to be installed) of the solar radiation to be diffracted by reflection for the geometry of incidence of the sunlight beams coinciding with the period of highest solar irradiance, which will coincide with the period where the photocell could suffer greater losses due to thermal effects if the system of the invention were not present. On the other hand, for the time of the year where the irradiance is not high enough to cause such losses due to thermal effects, as can be seen in **FIG.9(B),** the system of the invention will allow all the solar radiation to pass through in order to maximise the generation of photovoltaic energy.

The HOES, in turn, will be tuned to the absorption spectral band of the photovoltaic panel according to its composition materials, favouring that this spectral band is injected in the panel and reflecting those wavelengths that are not efficient to produce electricity and contribute to the overheating of the panel.

Optionally, the HOE may have a layer composed of a diffraction grating that fixes the direction of diffraction by transmission to a normal incidence (90°) on the panel independently of the location of the Sun and its angle of incidence on the system of the invention, thus minimising the possible losses produced by the variable angle of incidence of the sunlight.

*Photocatalytic holographic system of the invention*

The photocatalytic holographic system of the invention may be formed according to two designs.

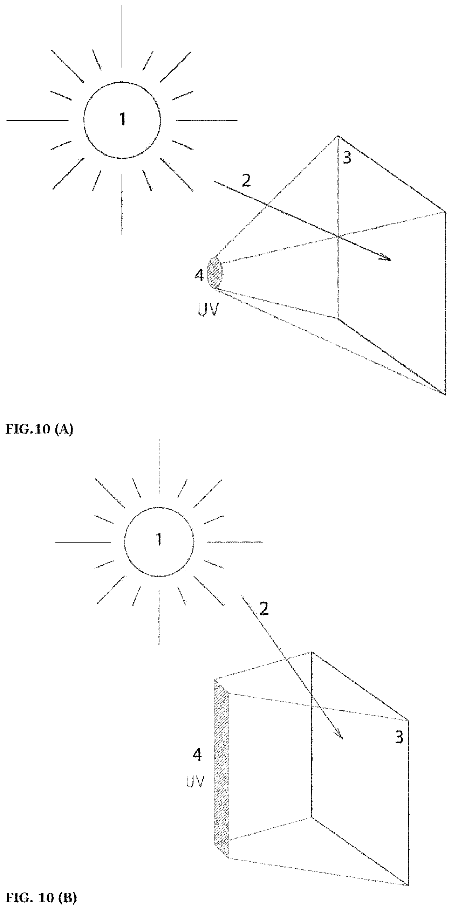

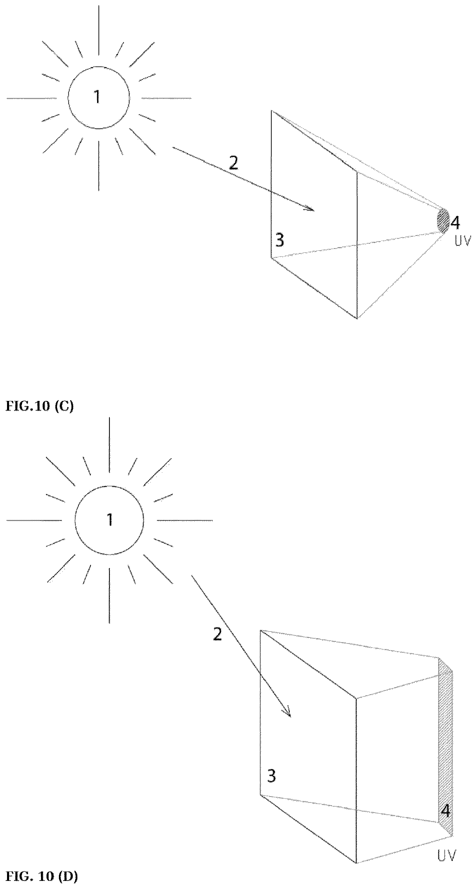

On the one hand, it will consist of a multilayer tessellation of holographic optical elements, which will consist of a tessellation of HOXELs, all of which are generated by reflection and tuned to reflect the wavelengths of the ultraviolet (UV) band, tuned to the activation wavelength of the semiconductor or photocatalyst used, and whose function will be to diffract by reflection the ultraviolet (UV) wavelengths required by the photocatalyst, which can be concentrated in a small area, **FIG.10(A)** or extensive, **FIG.10(B)** depending on the design of the photocatalytic reactor. **FIG.10** shows an example of the operation of a holographic photocatalytic system of the invention operating by reflection. 1 indicates the Sun, 2 indicates the beam of solar radiation (white light), 3 is the holographic system of the invention composed of HOES, 4 is the focusing of the diffracted beam in UV by reflection.

On the other hand, the holographic photocatalytic system of the invention will be formed by a multilayer tessellation of holographic optical elements, which, in a first layer will consist of a tessellation of HOXEL generated by reflection and tuned to reflect all the wavelengths of the visible and infrared spectrum, which are not necessary for the photoactivation of the photocatalyst and whose functionality will be to prevent this radiation from reaching the solution (water), which may cause thermal effects or undesired reactions. A second layer will be formed by a tessellation of HOXEL by transmission with optical magnification designed to concentrate the solar radiation passing through the system in a reduced area, **FIG.10(C)** or extensive **FIG.10 (D)** depending on the design of the photocatalytic reactor. The design parameters of the HOES must be adjusted in geometry, focal area and spectral band to the design of the photocatalyst reactor, its geometry and the activation wavelength of the material used as a photocatalyst that accelerates the reaction.

*Holographic system of the invention for daylight illumination systems*

The holographic system of the invention for daylight illumination systems may be formed according to two designs. On the one hand, it will consist of a multilayer tessellation of holographic optical elements generated by reflection and tuned to reflect the wavelengths of the red (R, red), green (G, green) and blue (B, blue) band, which by addition generate white light. The functionality will be to diffract by reflection the selected wavelengths to concentrate them and introduce them into a waveguide (normally optical fibre) that guides them to the exit of the fibre and by means of a diffuser (holographic or not) diffuses the light to illuminate.

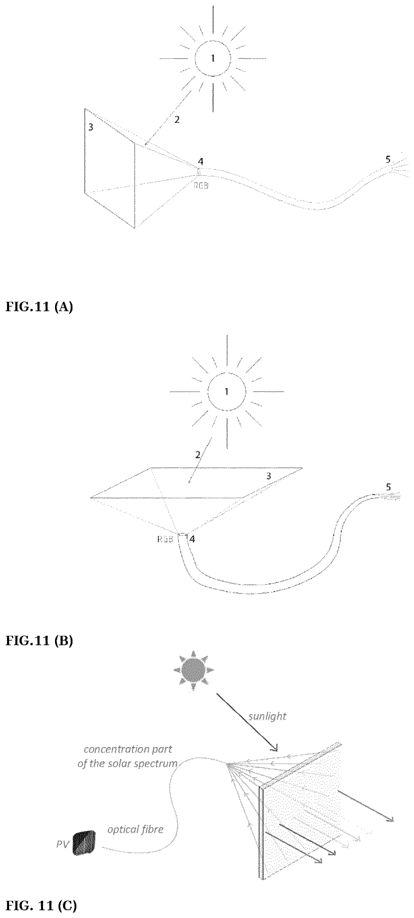

**FIG.11(A)** shows an example of the operation of a holographic system of the invention for daylight illumination systems operating by reflection. 1 indicates the Sun, 2 indicates the beam of solar radiation (white light), 3 is the holographic system of the invention consisting of HOES, 4 is the focusing of the diffracted beam in RGB by reflection, 5 will be the light at the output of the optical fibre.

On the other hand, the photocatalytic holographic system of the invention will be formed by a multilayer tessellation of holographic optical elements, which, in a first layer will consist of a tessellation of HOXEL generated by reflection and tuned to reflect all the unwanted wavelengths of the visible and infrared spectrum, which are not necessary for illumination and whose functionality will be to prevent such radiation from reaching the entrance of the optical fibre. A second layer will consist of a transmission tessellation of HOXELs with optical magnifiers designed to concentrate the solar radiation passing through the system, **FIG.11(B).**

**FIG.11(B)** shows an example of the operation of a holographic system of the invention for daylight illumination systems operating by transmission. 1 indicates the Sun, 2 indicates the beam of solar radiation (white light), 3 is the holographic system of the invention consisting of HOES, 4 is the focusing of the diffracted beam in RGB by transmission, 5 will be the light at the output of the optical fibre. The design parameters can be adjusted according to the desired chromaticity for the illumination, depending on the lighting effect to be provided. Also, if the system is to be used as an energy transmitter to power a photovoltaic cell, **FIG.11(C),** the HOE must be tuned to the absorption band corresponding to the materials of the photocell.

## Claims

1. A holographic system for the optimisation of incident solar radiation on a physical system comprising a meshed structure formed by:

   one or more holographic optical elements configurable according to at least one of the following parameters:
   (a) the wavelength ($\lambda$) or colour to be diffracted;
   (b) the bandwidth ($\Delta\lambda$) or amount of that colour to be diffracted; (c) the diffraction efficiency ($\eta$) or percentage to be diffracted with respect to the incident light; (d) the direction of diffraction (a); and (e) the presence or absence of optical magnification (M);
   where the lattice structure is a simple structure consisting of groupable holographic optical elements in a regular or semi-regular tessellation, forming fractal structures; or the lattice structure is a fractal structure composed by superposition of two or more tessellations; the multilayer tessellation structure being configured for superposition of optical effects according to the optical properties of each layer of holographic optical elements;
   so that the optical properties of such holographic optical elements are selected according to the solar radiation required for the optimisation of radiation in the visible and/or near infrared and/or ultraviolet spectrum on a solar radiation harvesting system.

2. The system according to claim 1 wherein the physical system is one selected from: (a) an agricultural system; (b) an agro-holophotovoltaic system; (c) a dynamic climate control system; (d) a radiation rediffusion system; (e) an indoor radiation rediffusion system; (f) an environmental integration system; (g) a photovoltaic power generation system; (h) a photocatalytic system; and (i) a daylighting system.

3. A holographic method for optimising incident solar radiation comprising:

   establish a pattern of incident solar radiation in the visible and/or near infrared and/or ultraviolet spectrum that is of interest for a given physical system;
   configuring one or more holographic optical elements according to at least one of the following parameters:
   (a) the wavelength ($\lambda$) or colour to be diffracted;

   (b) the bandwidth ($\Delta\lambda$) or amount of that colour to be diffracted; (c) the diffraction efficiency ($\eta$) or percentage to be diffracted with respect to the incident light; (d) the direction of diffraction (a); and (e) the presence or absence of optical magnification (M);
   grouping one or more holographic optical elements into one or more diffractive reflection blocks, whose optical properties are selected according to the optical effect required by the pattern of interest of the incident solar radiation previously established; and distributing the diffractive reflection blocks forming a lattice with a fractal structure,
   such that the lattice structure is a simple structure consisting of holographic optical elements groupable in a regular or semi-regular tessellation, forming fractal structures; or the lattice structure is a fractal structure composed by superposition of two or more tessellations; the multilayer tessellation structure being configured for the superposition of optical effects according to the optical properties of each layer of holographic optical elements.

4. The holographic method of claim 3 further comprising the steps of:

   configure a multilayer tessellation of holographic optical elements, which, in a first layer, will consist of a tessellation of holographic optical elements all of which are generated by reflection and tuned to reflect spectral wavelengths that are not desired to be delivered to an agricultural crop and whose functionality is to prevent unwanted wavelengths from being delivered to crops; and
   configure a second layer formed by a tessellation of holographic optical elements by transmission, which may or may not present optical magnification in their design, and where the functionality of these holographic optical elements is to redirect and concentrate or not the optimised light, both in direction, spectrum and intensity that will be provided to the crops, being able to concentrate the light, if necessary in reduced geometric areas to illuminate each plant individually or an extensive focalisation, being able to illuminate a group of crops together.

5. The holographic method of claim 4 further comprising the steps of:
   placing the multilayer tessellation between photovoltaic panels and setting the diffraction direction of these multilayer tessellations in such a way as to provide illumination to crops under the panels that would otherwise be shaded by the photovoltaic panels.

6. The holographic method of claim 3 further comprising the steps of:
configure a dynamic climate control stage with a tessellation of holographic optical elements, all of which are generated by reflection and tuned to reflect spectral wavelengths that are not desired to penetrate a given installation; and where such holographic optical elements are designed to have variable efficiency, and may diffract by reflection all or a percentage of a portion of the spectrum of incident solar radiation, as required by building geometry, geographic location or orientation.

7. The holographic method of claim 3 further comprising the steps of:
configure a multilayer tessellation of holographic optical elements, all of which are generated by reflection and tuned to reflect the desired spectral wavelengths according to specific geometries of incidence of sunlight on a building; where such elements may be designed to have variable efficiency, being able to diffract by reflection all or a percentage of part of the spectrum of incident solar radiation, as required by the geometry of the building, its geographical location or its orientation.

8. The holographic method of claim 3 further comprising the steps of:
configure a multilayer tessellation of reflection-generated holographic optical elements tuned to reflect spectral wavelengths that are tuned to the facility's Lifi emitters in either the visible or infrared spectrum.

9. The holographic method of claim 3 further comprising the steps of:
configure a multilayer tessellation of holographic optical elements, all of which are generated by reflection and tuned to reflect ultraviolet wavelengths.

10. The holographic method of claim 3 further comprising the steps of:
configure a multilayer tessellation of holographic optical elements, all of which are generated by reflection and tuned to reflect spectral wavelengths that are not desired to be incident on the photovoltaic panel; and where the holographic optical elements are designed to have variable efficiency, being able to diffract by reflection all or a percentage of a portion of the spectrum of incident solar radiation, as required by geographic location or orientation of the photovoltaic panel.

11. The holographic method of claim 3 further comprising the steps of:
configure a multilayer tessellation of holographic optical elements, all of which are generated by reflection and tuned to reflect all wavelengths of the visible and infrared spectrum, which are not necessary for photoactivation of the photocatalyst and whose function is to prevent this radiation from reaching the solution, which may cause thermal effects or undesired reactions; and where a second layer will be formed by a tessellation of transmission holographic optical elements with optical magnification designed to concentrate the solar radiation that passes through the system according to the design of the photocatalytic reactor.

12. The holographic method of claim 3 further comprising the steps of:

configuring a multilayer tessellation of holographic optical elements, all of which are generated by reflection and tuned to reflect wavelengths in the visible spectrum, and where the tessellation diffracts the selected wavelengths by reflection to concentrate them into a waveguide which guides them to the fibre exit and diffuses the light for illumination by means of a diffuser; or
configure a tessellation of holographic optical elements, all of which are generated by reflection and tuned to reflect all unwanted wavelengths in the visible and infrared spectrum, which are not necessary for illumination and whose functionality will be to prevent such radiation from reaching the entrance of an optical fibre.

13. The method according to claim 3 wherein the lattice consists of holographic optical elements having a geometric shape selected from circular, square, rectangular or hexagonal.

14. The method according to claim 4 wherein the first layer or the second layer is replaced tessellation of holographic optical elements by a diffractive or refractive non-holographic optical element.

FIG.1

30

FIG.2(A)

FIG.2(B)

FIG. 2(C)

FIG.2(D)

FIG.2(E)

FIG.2(F)

FIG.2

FIG.3(A)

FIG.3(B)

FIG.4(A)

FIG.4(B)

FIG.4(C)

FIG.4 (D)

FIG.5 (A)

FIG. 5 (B)

FIG. 6(A)

FIG. 6(B)

FIG.7

FIG.8

FIG. 9 (A)

FIG. 9 (B)

FIG.10 (A)

FIG. 10 (B)

FIG.10 (C)

FIG. 10 (D)

**FIG.11 (A)**

**FIG.11 (B)**

**FIG. 11 (C)**

Europäisches
Patentamt

European
Patent Office

Office européen
des brevets

# EUROPEAN SEARCH REPORT

Application Number

EP 23 38 3284

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | C G Stojanoff ET AL: "New developments in holographic solar concentrators: A review", Conference: SPIE Friburg, Germany at: Freiburg, Germany , 14 October 2018 (2018-10-14), pages 1-12, XP093165308, ResearchGate Retrieved from the Internet: URL:https://www.researchgate.net/publicati on/328271969 [retrieved on 2024-05-22] * section 2, 3; figures 1-5 * | 1-3,13 | INV. G03H1/00 G03H1/02 G02B5/20 G02B5/32 F41H3/02 ADD. G03H1/22 G03H1/26 G03H1/28 G03H1/30 |
| X | COLLADOS M VICTORIA ET AL: "Holographic solar energy systems: The role of optical elements", RENEWABLE AND SUSTAINABLE ENERGY REVIEWS, vol. 59, 19 January 2016 (2016-01-19), pages 130-140, XP029429535, ISSN: 1364-0321, DOI: 10.1016/J.RSER.2015.12.260 | 1-4,6, 8-14 | |
| Y | * section 2; figures 5-15 * | 5,7 | |
| Y | US 2014/130843 A1 (KOSTUK RAYMOND K [US] ET AL) 15 May 2014 (2014-05-15) * paragraphs [0023], [0026], [0027]; figure 2 * | 5 | |
| Y | US 5 877 874 A (ROSENBERG GLENN A [US]) 2 March 1999 (1999-03-02) * the whole document * | 7 | |

TECHNICAL FIELDS SEARCHED (IPC)

G03H
G02B

The present search report has been drawn up for all claims

| Place of search | Date of completion of the search | Examiner |
|---|---|---|
| Munich | 24 May 2024 | Jarosch, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 38 3284

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2024

| Patent document cited in search report | Publication date | Patent family member(s) | | Publication date |
|---|---|---|---|---|
| US 2014130843 A1 | 15-05-2014 | NONE | | |
| US 5877874 A | 02-03-1999 | AU | 722844 B2 | 10-08-2000 |
| | | BR | 9811924 A | 15-08-2000 |
| | | CA | 2294908 A1 | 28-01-1999 |
| | | CN | 1263603 A | 16-08-2000 |
| | | EP | 1023619 A1 | 02-08-2000 |
| | | JP | 2001510902 A | 07-08-2001 |
| | | KR | 20010022006 A | 15-03-2001 |
| | | TW | 369610 B | 11-09-1999 |
| | | US | 5877874 A | 02-03-1999 |
| | | WO | 9904296 A1 | 28-01-1999 |

EPO FORM P0459

For more details about this annex : see Official Journal of the European Patent Office, No. 12/82